# EUROPEAN PATENT APPLICATION

(11) **EP 2 131 099 A1**
(43) Date of publication of application: **09.12.2009**
(21) Application number: 08720512.6
(22) Date of filing: 18.03.2008
(51) Int. Cl.: F21V 8/00, G02B 5/00, G02F 1/13357, F21Y 101/02

(54) **SURFACE ILLUMINATION DEVICE AND LIQUID CRYSTAL DISPLAY USING THE SAME**

(30) Priority: 20.03.2007 JP 2007072287; 27.06.2007 JP 2007168448
(71) Applicant: Panasonic Corporation, Kadoma-shi Osaka 571-8501 (JP)
(72) Inventor: NAGATA, Takayuki, Osaka 540-6207 (JP); YAMAMOTO, Kazuhisa, Osaka 540-6207 (JP); ITOH, Tatsuo, Osaka 540-6207 (JP)
(74) Representative: Schwabe - Sandmair - Marx
(86) International application number: PCT/JP2008/000627
(87) International publication number: WO 2008/114507

(57) **Abstract**

A light guide body is arranged and light emerging from the light guide body is made incident on a light guide plate. The light guide body is formed to introduce the incident light to the light guide plate in such a manner that the light incident on an end surface of the light guide plate has a specified light quantity distribution.

## Description

### FIELD OF THE INVENTION

The present invention relates to a surface illumination device using a laser light source or a light-emitting diode (LED) as a light source and a liquid crystal display using the same.

### BACKGROUND ART

Surface illumination devices including light sources such as discharge tubes or light-emitting diodes (LEDs) as backlight illumination are generally used in liquid crystal displays used in display panels and the like. Since high-luminance and strong monochromatic light is required upon using these surface illumination devices in large-size displays and the like, a consideration of a construction using a laser light source has been also started in recent years.

Elaboration to make luminance uniform by eliminating luminance nonuniformity in entire display panel surfaces and elaboration to reduce power consumption by improving light utilization efficiency are required for such display panels. Further, as display panels have gotten larger, a demand to thin display panels for the use as wall mounted TVs and the like has been increased in recent years.

A so-called direct illumination arrangement for directly illuminating a display panel from behind is known as a construction with high light utilization efficiency and little luminance nonuniformity, and a construction using a laser as a light source has also been proposed. For example, patent literature 1 discloses a construction for scanning laser light using a polygon mirror and causing it to be reflected by a flat reflecting mirror after three laser beams of red, green and blue are combined into one laser light.

Further, a construction disclosed in patent literature 2 is, for example, known as the one suitable for a thin shape. Patent literature 2 discloses a construction in which LEDs are arranged on the opposite end surfaces of a bar-shaped light guide body formed such that light can be extracted from a side surface thereof, thereby forming a linear light source, and light from this light guide body is caused to be incident on a side surface of a light guide plate and to emerge from one principle surface of the light guide plate, thereby realizing surface illumination.

However, in patent literature 1, a distance between the flat reflecting mirror and the display panel needs to be long in order to scan the entire display panel surface, which presents a problem of making thinning difficult.

The construction of patent literature 2 is thought to be able to also deal with a thin larger screen by replacing the LEDs by laser light sources, but it is difficult to make the bar-shaped light source using the bar-shaped light guide body uniformly luminous and it is thought to be difficult to attain quality required for liquid crystal TVs and the like with large screens.
Patent Literature 1: Japanese Unexamined Patent Publication No. H06-148635
Patent Literature 2: Japanese Unexamined Patent Publication No. H11-271767

### DISCLOSURE OF THE INVENTION

In order to solve the problem residing in the prior art, an object of the present invention is to provide a surface illumination device which has a high luminance and no luminance nonuniformity and can be thinned and a liquid crystal display using the same.

In order to solve the above object, one aspect of the present invention is directed to a surface illumination device, comprising a light source for emitting irradiation light; a light guide plate having an end surface on which the irradiation light from the light source is incident and a principal surface from which the irradiation light incident on the end surface emerges; and a light guide body capable of introducing the irradiation light to the end surface of the light guide plate while branching the irradiation light so that the irradiation light before being incident on the end surface of the light guide plate has a specified light quantity distribution in a longitudinal direction of the end surface.

According to the present invention, a surface illumination device can be realized which has high luminance and no luminance nonuniformity and can be thinned.

Another aspect of the present invention is directed to a liquid crystal display, comprising a liquid crystal panel; and a backlight illumination device for illuminating the liquid crystal panel from behind, wherein the above surface illumination device is used as the backlight illumination device.

According to the present invention, a liquid crystal display can be realized which has good color reproducibility, high luminance and little luminance nonuniformity even when having a large screen.

### BRIEF DESCRIPTION OF THE DRAWINGS

FIG. 1 is a schematic construction diagram of a surface illumination device according to a first embodiment of the invention when viewed from behind,
FIG. 2 is a diagram showing a side surface configuration of a main part when the surface illumination device of FIG. 1 is viewed in a direction II,
FIG. 3 is an enlarged view of a part III in the surface illumination device of FIG. 2,
FIG. 4 is a side view of a main part of a liquid crystal display using the surface illumination device according to the first embodiment of the invention,
FIG. 5 is a schematic construction diagram showing a modification of the surface illumination device according to the first embodiment of the invention,
FIG. 6 is a schematic construction diagram showing a modification of the surface illumination device according to the first embodiment of the invention when viewed from behind,
FIG. 7 is an enlarged view of a part VII in the surface illumination device of FIG. 6,
FIG. 8 is a schematic construction diagram of a surface illumination device according to a second embodiment of the invention when viewed from behind,
FIG. 9 is a side view of a main part when the surface illumination device of FIG. 8 is viewed in a direction IX,
FIG. 10 is a schematic construction diagram showing a modification of the surface illumination device according to the second embodiment of the invention when viewed from behind,
FIG. 11 is a side view of a main part when the surface illumination device of FIG. 10 is viewed in a direction XI,
FIG. 12 is a schematic construction diagram of a surface illumination device according to a third embodiment of the invention when viewed from behind,
FIG. 13 is a schematic construction diagram of a surface illumination device according to a fourth embodiment of the invention when viewed from behind,
FIG. 14 is a side view of a main part when the surface illumination device of FIG. 13 is viewed in a direction XIV,
FIG. 15 is an enlarged view of a part XV in the surface illumination device of FIG. 13,
FIG. 16 is a side view of a main part of a liquid crystal display using the surface illumination device according to the fourth embodiment of the invention,
FIG. 17 is a schematic construction diagram showing a modification of the surface illumination device according to the fourth embodiment of the invention when viewed from behind,
FIG. 18 is a diagram of a light guide body in the surface illumination device of FIG. 17 when viewed in a direction XVIII,
FIG. 19 is a schematic construction diagram of a surface illumination device according to a fifth embodiment of the invention when viewed from behind,
FIG. 20 is a diagram showing a method for adjusting a mirror of FIG. 19,
FIG. 21 is a schematic construction diagram showing a modification of the surface illumination device according to the fifth embodiment of the invention when viewed from behind,
FIG. 22 is a schematic construction diagram showing another modification of the surface illumination device according to the fifth embodiment of the invention when viewed from behind,
FIG. 23 is a side view of the surface illumination device of FIG. 22 when viewed in a direction XXIII,
FIG. 24 is a schematic construction diagram showing a surface illumination device according to a sixth embodiment of the invention when viewed from behind,
FIG. 25 is a schematic construction diagram showing a modification of the surface illumination device according to the sixth embodiment of the invention when viewed from behind,
FIG. 26 is a schematic construction diagram showing a surface illumination device according to a seventh embodiment of the invention when viewed from behind, and
FIG. 27 is a schematic construction diagram showing a surface illumination device according to an eighth embodiment of the invention when viewed from behind.

### BEST MODES FOR EMBODYING THE INVENTION

Hereinafter, embodiments of the present invention are described with reference to the drawings. The following embodiments are specific examples of the present invention and not of the nature to limit the technical scope of the present invention. The same elements are identified by the same reference numerals and may not be described in some cases. The drawings diagrammatically show mainly represent constituent elements for easier understanding, and the shapes and the like are not accurately represented.

### (First Embodiment)

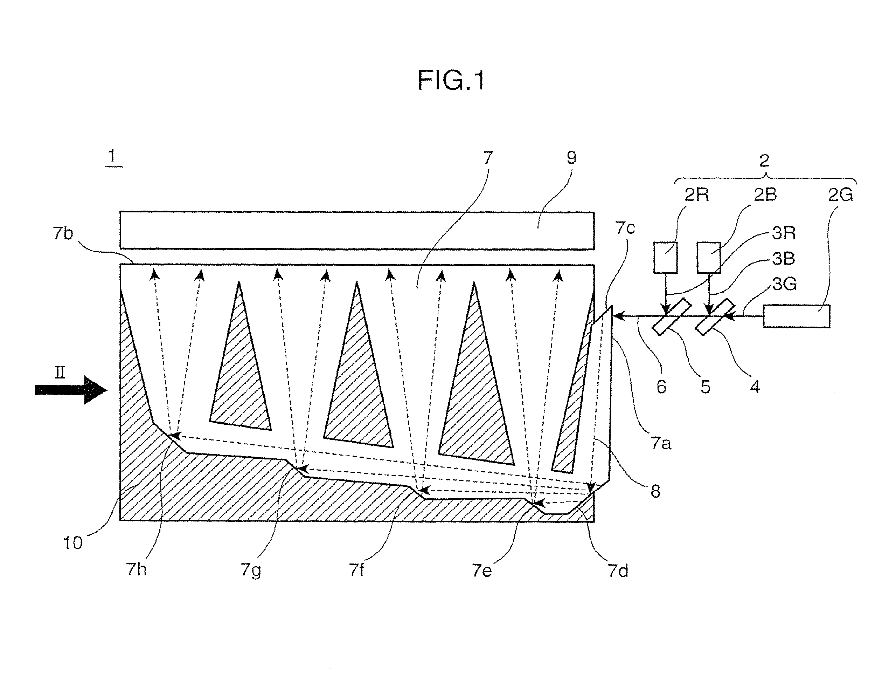

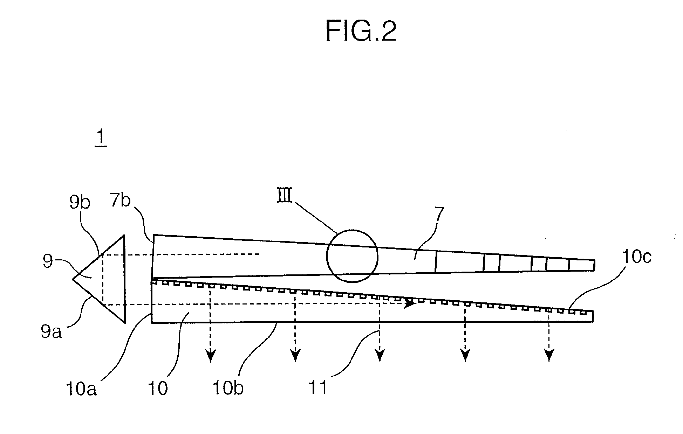

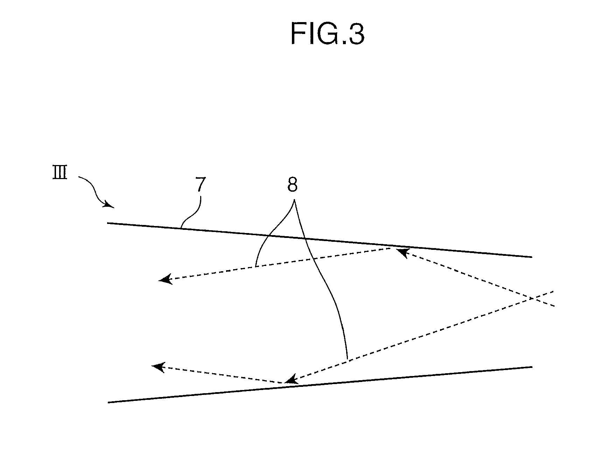

FIGS. 1 to 3 show a schematic construction of a surface illumination device 1 according to one embodiment. FIG. 1 is a schematic construction diagram of the surface illumination device when viewed from behind. FIG. 2 is a side view of a main part of the surface illumination device when viewed in a direction II of FIG. 1. FIG. 3 is an enlarged view of a part III of FIG. 2.

In FIGS. 1 and 2, the surface illumination device 1 is provided with laser light sources 2, dichroic mirrors 4 and 5, a light guide body 7, a light guide plate 10 and a connecting portion 9.

The laser light sources 2 include a red laser light source (R light source) 2R, a green laser light source (G light source) 2G and a blue laser light source (B light source) 2B.

The dichroic mirrors 4, 5 combine red laser light (R light) 3R, green laser light (G light) 3G and blue laser light (B light) 3B emitted from the respective laser light sources 2R, 2G and 2B into laser light 6.

The light guide body 7 is a plate-like member formed such that light incident on an incident surface 7a emerges from an emergent surface 7b. Propagation light 8 indicated by dotted line is the one propagating in the light guide body 7.

The light guide plate 10 is so formed that light incident on an end surface 10a emerges from a principal surface 10b. Emergent light emerging from the light guide plate 10 is indicated by 11.

The connecting portion 9 is formed, for example, by a bar-shaped light guide body having a triangular cross section to introduce light emerging from the light guide body 7 to the light guide plate 10.

The laser light sources 2 are constructed to emit R light 3R, G light 3G and blue light 3B whose polarization directions are parallel or orthogonal to the principal surface 10b of the light guide plate 10. The laser light sources 2 are also constructed to emit R light 3R, G light 3G and blue light 3B whose polarization directions are all the same. Although not shown, collimator lenses are provided for the respective light sources 2R, 2G and 2B, so that parallel light is incident on the light guide body 7.

The light guide body 7 is made of, for example, acrylic resin. Side surfaces 7c to 7h constituting the outer surfaces of the light guide body 7 are formed to totally reflect the propagation light 8. Specifically, since the refractive index of acrylic resin is about 1.49 and the critical angle thereof is about 42°, the respective side surfaces 7c to 7h are designed so that incident angles of the propagation light 8 are 42° or larger.

The side surfaces 7c to 7h are formed to be substantially perpendicular to the principal surface 10b of the light guide plate 10, have curvatures in cross-sectional shapes in a plane parallel to the principal surface and diverge the totally reflected light. The light guide body 7 is so tapered as to increase the thickness thereof toward the connecting portion 9.

Similarly, the connecting portion 9 is made of acrylic resin. Side surfaces 9a, 9b of the connecting portion 9 are formed to totally reflect the propagation light 8. Specifically, the side surfaces 9a, 9b are designed so that incident angles of the propagation light 8 thereon are about 45° larger than the critical angle of 42°. In the case of employing a construction capable of total reflection in this way, reflective coating is, in principle, unnecessary for the connecting portion 9. However, since the incident angles are so designed as to approximate to a total reflection condition, it is preferable to use reflective coating for the connecting portion 9, for example, in the case where light incident on the connecting portion 9 varies.

A rear surface 10c of the light guide plate 10 is formed with a plurality of deflection grooves for deflecting light incident on the light guide plate 10 toward the principal surface 10b by total reflection. The respective deflection grooves are formed to extend in a direction substantially parallel to the end surface 10a.

Next, the operation of the surface illumination device 1 constructed as above is described. In FIG. 1, the R light source 2R, the G light source 2G and the B light source 2B emit beams of laser light 3R, 3G and 3B which are, for example, polarized on a plane parallel to the plane of FIG. 1. The respective beams of laser light 3R, 3G and 3B are combined into one laser light 6 as RGB light by the dichroic mirrors 4, 5. This laser light 6 is incident on the incident surface 7a of the light guide body 7, propagates as the propagation light 8 and is totally reflected by the side surface 7c to propagate toward the side surface 7d.

Here, the propagation light 8 reflected by the side surface 7c is slightly diverged. This propagation light 8 propagates while being repeatedly reflected in a light guide path from the side surface 7c to the side surface 7d, whereby a light quantity distribution in a light guide path cross section is uniformized.

The uniformized propagation light 8 is totally reflected by the side surface 7d. The totally reflected propagation light 8 has parts thereof respectively totally reflected by the side surfaces 7e, 7f, 7g and 7h to be deflected toward the emergent surface 7b. At this time, if the side surfaces 7e, 7g, 7g and 7h are so formed as to uniformize the light quantity of the propagation light 8 reflected by the side surfaces 7e, 7f, 7g and 7h, the propagation light 8 is equally branched, with the result that light with a uniform light quantity distribution emerges from the emergent surface 7b.

Further, since the respective side surfaces 7c to 7h of the light guide body 7 are perpendicular to a polarization plane of the propagation light 8 and the principal surface of the light guide body 7 is parallel to the polarization plane of the propagation light 8, polarization is maintained when the light propagates while being reflected in the light guide body 7 and light with aligned polarization emerges from the light guide body 7.

At this time, the light emerging from the emergent surface 7b is substantially parallel to the principal surface 10b of the light guide plate 10. FIG. 3 is an enlarged diagram of a part of the side surface of the light guide body 7 showing a state where a propagation direction of the propagation light 8 approximates to a horizontal direction of FIG. 3. In FIG. 3, the propagation light 8 propagates while being totally reflected between the two front and rear principal surfaces of the light guide body 7. Since the light guide body 7 is so tapered as to increase the thickness thereof toward the emergent surface 7b, the propagation direction approximates more to the horizontal direction of FIG. 3 every time the propagation light 8 is reflected by the front or rear principal surface of the light guide body 7. Since the number of reflection by the principal surfaces increases as the propagation direction is deviated from the horizontal direction of FIG. 3, the propagation direction of such light quickly approximates to the horizontal direction of FIG. 3. Therefore, the propagation light 8 propagating in the light guide body 7 becomes light with a small variation of the propagation direction.

The light incident on the connecting portion 9 after emerging from the light guide body 7 is deflected substantially at right angles by the side surfaces 9a, 9b of the connecting portion 9 to be returned and, then, emerges from the connecting portion 9. Since the propagation direction of the light incident on the connecting portion 9 is substantially aligned with the horizontal direction of FIG. 3, most of the light is totally reflected by the side surfaces 9a, 9b to be returned without any loss.

The light emerging from the connecting portion 9 is incident on the end surface 10a of the light guide plate 10. The light incident on the light guide plate 10 is deflected by the deflection grooves formed in the rear surface 10c of the light guide plate 10 and emerges as irradiation light 11 from the principal surface 10b. Since the deflection grooves are formed parallel to the end surface 10a, i.e. perpendicular to the incident light on the light guide plate 10, the light 11 with aligned polarization emerges from the light guide plate 10.

Since the surface illumination device 1 constructed as above can cause uniform light to be incident on the side surface 10a of the light guide plate 10, the luminance distribution on the principal surface 10b of the light guide plate 10 can also be uniformized. Further, the surface illumination device 1 has an advantage of being able to obtain emergent light with aligned polarization and can be thinned. Since the respective side surfaces 7c to 7h are so designed as to have incident angles capable of totally reflecting the propagation light 8 in the light guide body 7 of this embodiment, special reflective coating becomes unnecessary for the respective side surfaces 7c to 7h, whereby cost can be reduced. However, this is not to the effect of excluding the application of coating to the respective side surfaces 7c to 7h. Even if coating is applied to the respective side surfaces 7c to 7h to reflect the propagation light 8, light utilization efficiency can be improved.

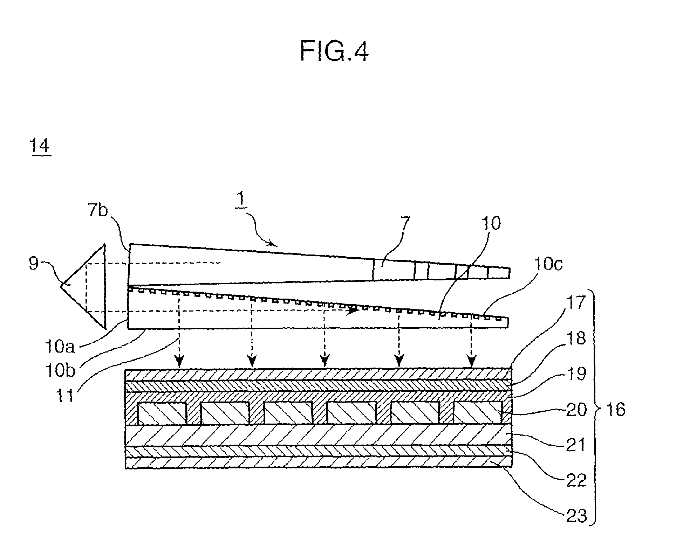

FIG. 4 shows a schematic construction of a liquid crystal display 14 using the surface illumination device 1 of FIG. 1 as a backlight illumination device and this construction is equivalent to that of FIG. 2 plus a liquid crystal panel 16.

The liquid crystal display 14 is provided with the liquid crystal panel 16 and the surface illumination device 1 shown in FIGS. 1 to 3. Since the surface illumination device 1 has the same construction as shown in FIGS. 1 to 3, it is not described.

In FIG. 4, the liquid crystal panel 16 includes a polarizing plate 17, a glass plate 18, a liquid crystal 19, RGB pixels 20, a color filter 21, a glass plate 22 and a polarizing plate 23. Here, the polarizing plate 17 is formed such that a transmission axis thereof coincides with a polarization direction of irradiation light of the surface illumination device 1.

In the liquid crystal display 14 thus constructed, most of irradiation light 11 emitted from the surface illumination device 1 passes through the polarizing plate 17 of the liquid crystal panel 16 and the glass plate 18 to be modulated by the liquid crystal 19 and the RGB pixels 20. The modulated light passes through the color filter 21, the glass plate 22 and the polarizing plate 23 and is displayed as an image of the liquid crystal display 14.

The liquid crystal display 14 of this embodiment constructed as above can have high color reproducibility and can be thinned by using lasers as light sources. Further, since the polarization of backlight illumination is aligned, loss of the light 11 caused by the polarizing plate 17 at the backlight side is small, wherefore low power consumption can be realized while high luminance is realized. Further, since a light quantity distribution of the emergent light 11 from the surface illumination device 1 can be uniformized, a liquid crystal display with less luminance nonuniformity and high image quality can be realized.

By optically bonding the connecting portion 9 to the light guide body 7 or the light guide plate 10 or inserting transparent gel or the like between the connecting portion 9 and the light guide body 7 or between the connecting portion 9 and the light guide plate 10, light transmission losses of the end surface 10a and the emergent surface 7b can be reduced. Therefore, light utilization efficiency can be further improved.

The connecting portion 9 may be resin-molded to be integral to the light guide body 7 or the light guide plate 10. This enables an improvement of light utilization efficiency and a cost reduction caused by a reduction in the number of parts.

Although R light 3R, G light 3G and B light 3B emitted from the laser light sources are combined by the dichroic mirrors in the surface illumination device 1 of this embodiment, the respective beams of light 3R, 3G and 3B may be separately incident on the light guide body 7 and combined in the light guide body 7.

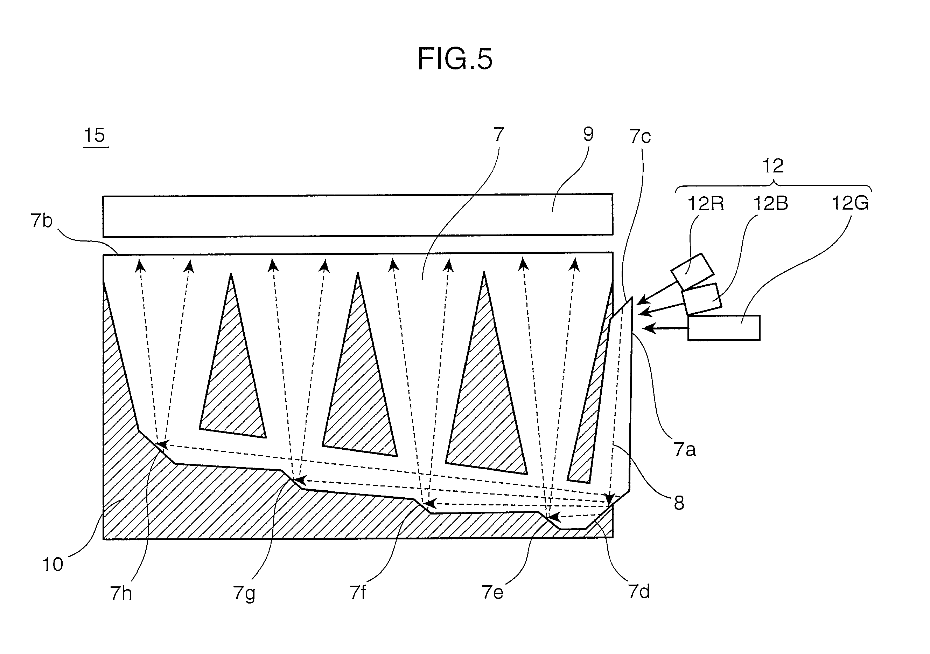

FIG. 5 shows a surface illumination device 15 constructed such that beams of light from laser light sources 12 including a R light source 12R, a G light source 12G and a B light source 12B are separately incident on a light guide body 7. If this construction is employed, dichroic mirrors become unnecessary to realize a cost reduction.

Although light is totally reflected by side surfaces 7c to 7h constituting the outer surfaces of the light guide body 7 in the surface illumination device 15 of this embodiment, side surfaces of through holes or grooves formed in the light guide body 7 may be used. In other words, side surfaces forming the light guide body 7 can be utilized as reflective side surfaces regardless of whether they are on the inner side or outer side of the light guide body 7.

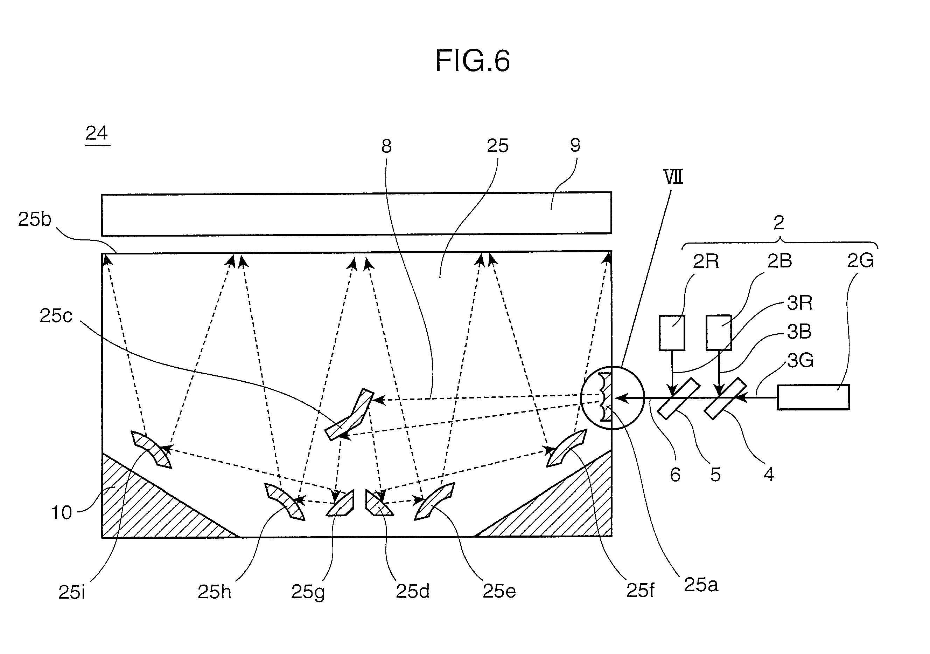

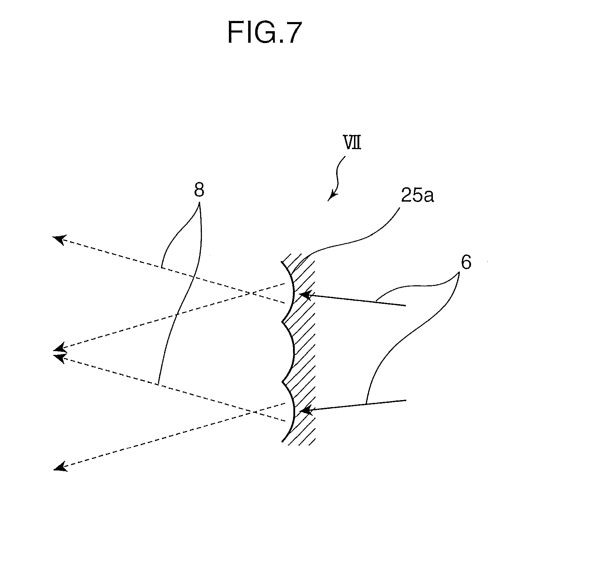

FIGS. 6 and 7 show a surface illumination device 24 using a light guide body formed with through holes. FIG. 6 is a schematic construction diagram of the surface illumination device 24 when viewed from behind. FIG. 7 is an enlarged view showing a part VII of FIG. 6.

Since the construction other than a light guide body 25 is the same as that of FIG. 1 in FIGS. 6 and 7, it is not described.

In FIG. 6, light is incident on an incident surface 25a of the light guide body 25 and emerges from an emergent surface 25b thereof. Through holes 25c to 25i are those penetrating the light guide body 25 in a thickness direction.

As shown in FIG. 7, the incident surface 25a is formed with a one-dimensional diffusion surface as an array of cylindrical surfaces. Side surfaces enclosing the through holes 25c are so formed as to totally reflect propagation light 8 diffused by the incident surface 25a in different directions while branching it into two. Side surfaces enclosing the through holes 25d to 25i are formed to have curvatures in cross-sectional shapes in a plane parallel to the principal surface 10b (see FIG. 2) of the light guide plate 10 and to totally reflect and diverge the propagation light 8.

In the surface illumination device 24 thus constructed, laser light 6 is incident on the incident surface 25a of the light guide body 25. Here, the laser light 6 is divided for each of a plurality of cylindrical surfaces formed in the incident surface 25a and propagates as the propagation light 8 in the light guide body 25 while being diverged. Since the propagation light 8 thus diverged by the respective cylindrical surfaces overlap each other in the distance, intensities of the light incident on the respective cylindrical surfaces are superimposed with each other, whereby substantially uniform light reaches the through hole 25c. One of the branched beams is introduced to the through hole 25d to be totally reflected by the side surface enclosing this through hole 25d. The totally reflected propagation light 8 is deflected by being totally reflected by the side surfaces enclosing the through holes 25e, 25f and propagates toward the emergent surface 25b to emerge therefrom. Similarly, the other beam branched by the side surface enclosing the through hole 25c is introduced to the through hole 25g and totally reflected by the side surface enclosing this through hole 25g. The totally reflected propagation light 8 is deflected by being totally reflected by the side surfaces enclosing the through holes 25h, 25i and emerges from the emergent surface 25b.

Also in the case of this construction, a light quantity distribution is uniformized and light maintaining the polarization thereof can emerge from the light guide body 25 similar to the construction of FIGS. 1 to 3. Further, the construction for branching, deflecting, converging and diverging light by the side surfaces enclosing the through holes 25c to 25i in this way has a high degree of freedom in design.

### (Second Embodiment)

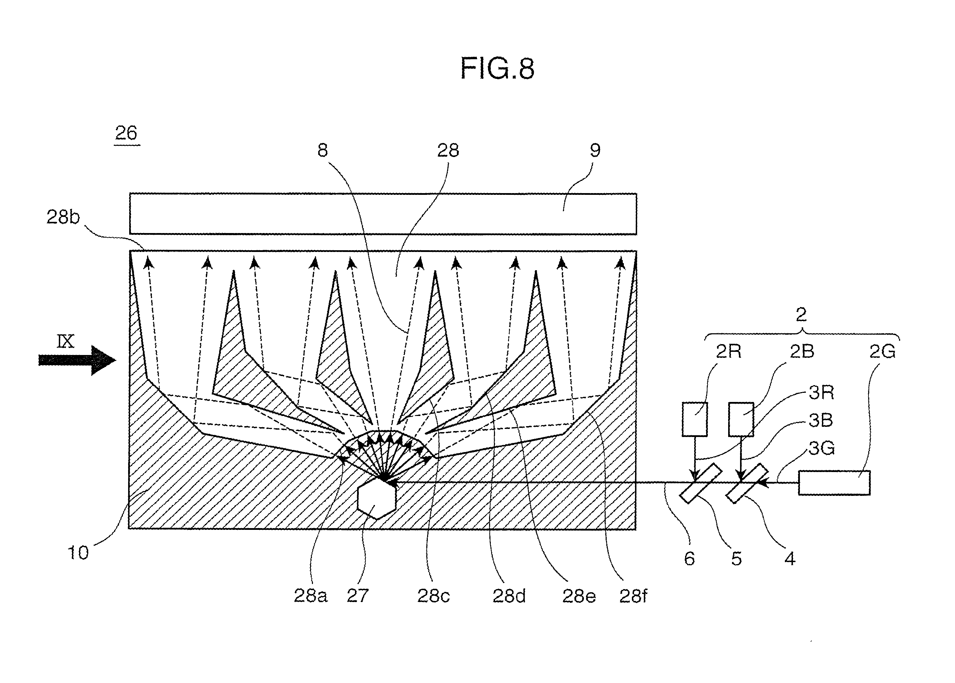

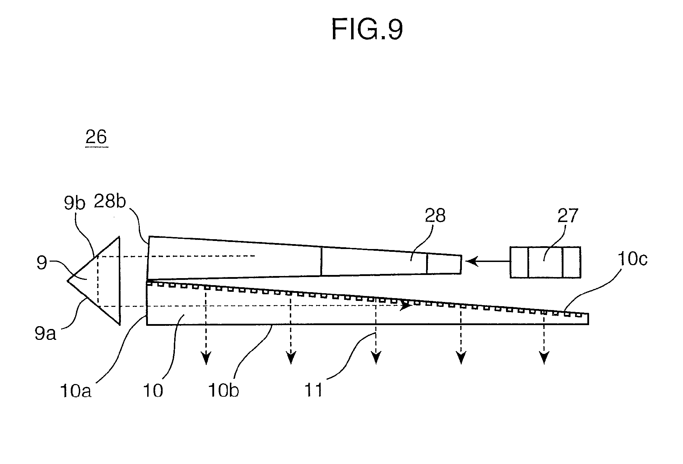

FIGS. 8 and 9 show a surface illumination device 26 according to a second embodiment of the present invention. FIG. 8 is a schematic construction diagram of the surface illumination device 26 when viewed from behind. FIG. 9 is a side view showing a main part when the surface illumination device 26 is viewed in a direction IX. In FIGS. 8 and 9, the same constituent elements as in the first embodiment are identified by the same reference numerals and not described.

In FIGS. 8 and 9, the surface illumination device 26 is provided with a polygon mirror 27 for reflecting and scanning laser light 6, and a light guide body 28 for causing the laser light 6 to be incident on an incident surface 28a and to emerge from an emergent surface 28b.

The light guide body 28 is formed with four through holes penetrating in a thickness direction thereof. The light guide body 28 is so formed that propagation light 8 is totally reflected by side surfaces enclosing the four through holes and the outer side surfaces other than the incident surface 28a and the emergent surface 28b. Specifically, the outer side surfaces of the light guide body 28 are adjusted to such angles as to be able to totally reflect the propagation light 8.

In the case of not utilizing total reflection, it is also possible to apply coating to the outer side surfaces of the light guide body 28 to reflect propagation light.

The light guide body 52 is so tapered as to gradually increase the thickness thereof toward a connecting portion 9.

In the surface illumination device 26 thus constructed, light sources 2 emit, for example, laser light 6 which is polarized on a plane parallel to the plane of FIG. 8. The laser light 6 is deflected by being reflected by the polygon mirror 27 and scanned according to the rotation of the polygon mirror 27. The laser light 6 scanned by the polygon mirror 27 is incident on the arcuate incident surface 28a of the light guide body 28. The light incident on the light guide body 28 propagates as propagation light 8, passes along any one of five light guide paths branched by the four through holes and emerges from the emergent surface 28b as light substantially perpendicular to the emergent surface 28b.

This operation is described. For example, the propagation light 8 having entered the middle light guide path propagates straight to be introduced to the emergent surface 28b and emerges from the emergent surface 28b. The propagation light 8 having reached a side surface 28c is totally reflected and deflected by the side surface 28c and a side surface 28d to be introduced to the emergent surface 28b and emerges from the emergent surface 28b. The propagation light 8 having reached a side surface 28e is totally reflected and deflected by the side surface 28e and a side surface 28f to be introduced to the emergent surface 28b and emerges from the emergent surface 28b. Similarly, the propagation light 8 having entered the two light guide paths on the left side of FIG. 8 is totally reflected twice by two side surfaces corresponding to the side surfaces 28c and 28d or the side surfaces 28e and 28e and emerges from the emergent surface 28b. In this way, the propagation light 8 passing the four left and right light guide paths is deflected by being totally reflected twice by the side surfaces, thereby being converted into light substantially perpendicular to the emergent surface 52b.

At this time, by forming the side surfaces for totally reflecting the light on the second time on the two left and right light guide paths, e.g. side surfaces 28d and 28f into parabolic surfaces, emergent angles of the light emerging from the light guide body 28 can be more perpendicular to the emergent surface 28b.

If the branched light quantities in the five light guide paths are set to be substantially equal, light with a uniform light quantity distribution emerges from the emergent surface 28b.

Since the respective side surfaces of the light guide body 28 are perpendicular to a polarization plane of the propagation light 8 and the principal surface of the light guide body 28 is parallel to the polarization of the propagation light 8, the polarization is maintained when the propagation light 8 is reflected and propagates in the light guide body 28 and light with aligned polarization emerges from the light guide body 28.

Further, since the light guide body 28 is tapered to change its thickness at this time, the light emerging from the emergent surface 28b is substantially parallel to the principal surface 10b of the light guide plate 10 similar to the first embodiment.

The light emerging from the light guide body 28 is incident on the connecting portion 9 and totally reflected by the side surfaces 9a, 9b to be returned, and emerges from the connecting portion 9. The light emerging from the connecting portion 9 is incident on an end surface 10a of the light guide plate 10, deflected by deflection grooves formed in a rear surface 10c and emerges as irradiation light 11 from the principal surface 10b. Here, since the deflection grooves formed in the rear surface 10c are formed parallel to the end surface 10a, i.e. perpendicular to the incident light on the light guide plate 10, the light 11 with aligned polarization emerges from the light guide plate 10.

The surface illumination device 26 thus constructed can emit more uniform light than in the first embodiment by causing highly uniform light to be incident along the incident surface 28a of the light guide body 28. Further, since the irradiation light 20 is scanned by the rotation of the polygon mirror 27, there is also a speckle removing effect.

According to the second embodiment, similar to the first embodiment, emergent light with aligned polarization can be obtained, the surface illumination device 26 can be thinned, light utilization efficiency is high and the surface illumination device 26 can be inexpensive produced.

Although the laser light 6 is incident on the light guide body 28 by being scanned by the polygon mirror 27 in the surface illumination device 26 of this embodiment, the laser light 6 may be incident on the light guide body 28 after being linearly diffused by the reflection of a curved mirror.

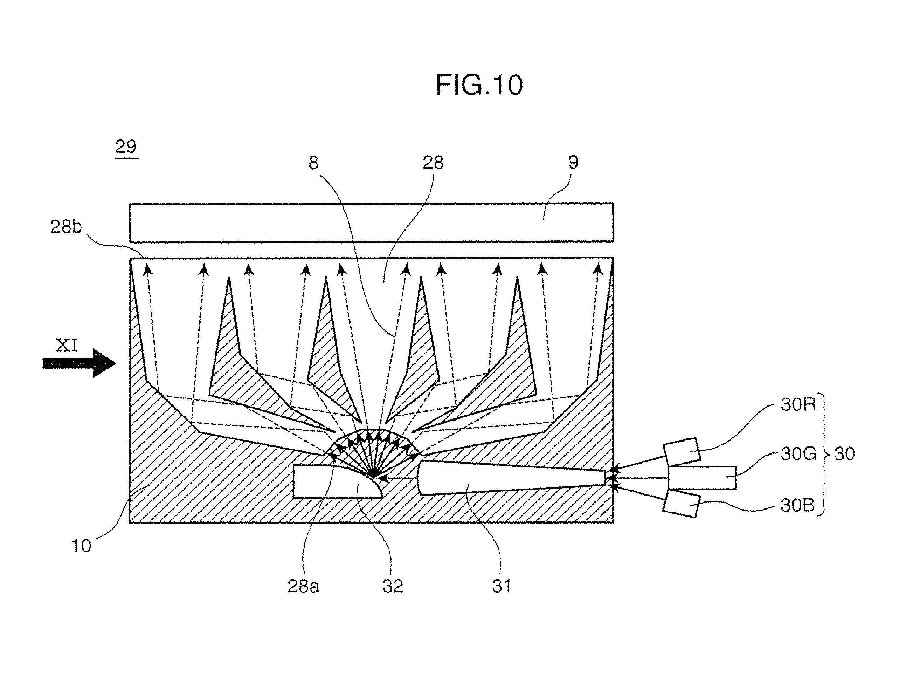

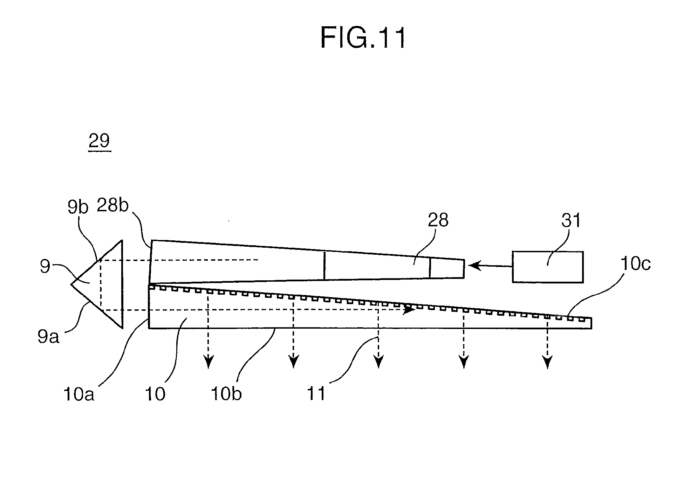

FIGS. 10 and 11 show a surface illumination device 29 using a curved mirror. FIG. 10 is a schematic construction diagram of the surface illumination device 29 when viewed from behind. FIG. 11 is a side view showing a main part when the surface illumination device 29 is viewed in a direction XI. In FIG. 10, the same constituent elements as shown in FIGS. 8 and 9 are identified by the same reference numerals and not described.

In FIG. 10, the surface illumination device 29 is provided with laser light sources 30 including a R light source 30R, a G light source 30G and a B light source 30B, a rod integrator 31 for uniformizing light incident from the laser light sources 30, and a curved mirror 32 for diffusing the light emerging from the rod integrator 31 in a one-dimensional direction.

Here, the rod integrator 31 is so tapered as to be widened toward the curved mirror 32 and formed so that emergent light approximates to parallel light. Further, the rod integrator 31 is so formed as to make a light quantity distribution of the laser light substantially uniform in a cross section orthogonal to a longitudinal direction of the rod integrator 31 by repeatedly reflecting the laser light between side surfaces while the laser light propagates from an end surface toward the laser light sources 30 to an end surface toward the curved mirror 32.

In the surface illumination device 29 thus constructed, beams of laser light emitted from the laser light sources 30 are combined by the rod integrator 31 and uniformized. Further, the laser light is converted into substantially parallel light by the tapered shape of the rod integrator 31. The laser light emerging from the rod integrator 31 is diffused in the one-dimensional direction by the curved mirror 32, deflected toward the light guide body 28 and incident on the incident surface 28a of the light guide body 28.

The laser light incident on the light guide body 28 emerges from the emergent surface 28b as light substantially perpendicular to the emergent surface 28b, is returned by the connecting portion 9 and incident on a light guide plate 10 similar to the mode shown in FIGS. 8 and 9. The laser light incident on the light guide plate 10 is deflected by deflection grooves formed in a rear surface 10c of the light guide plate 10 and emerges as irradiation light 11 from a principal surface 10b.

The surface illumination device 29 thus constructed can obtain effects similar to those of the mode shown in FIGS. 8 and 9 except the speckle removing effect. In addition, since the polygon mirror can be replaced by the curved mirror in the surface illumination device 29, cost can be reduced more.

Using the surface illumination device 26, 29 shown in the second embodiment as a backlight illumination device, a liquid crystal display as shown in FIG. 2 can be constructed. If this construction is employed, a liquid crystal display can be realized which has good color reproducibility, high luminance and less luminance nonuniformity even when having a large screen. It is also possible to realize a thin liquid crystal display.

### (Third Embodiment)

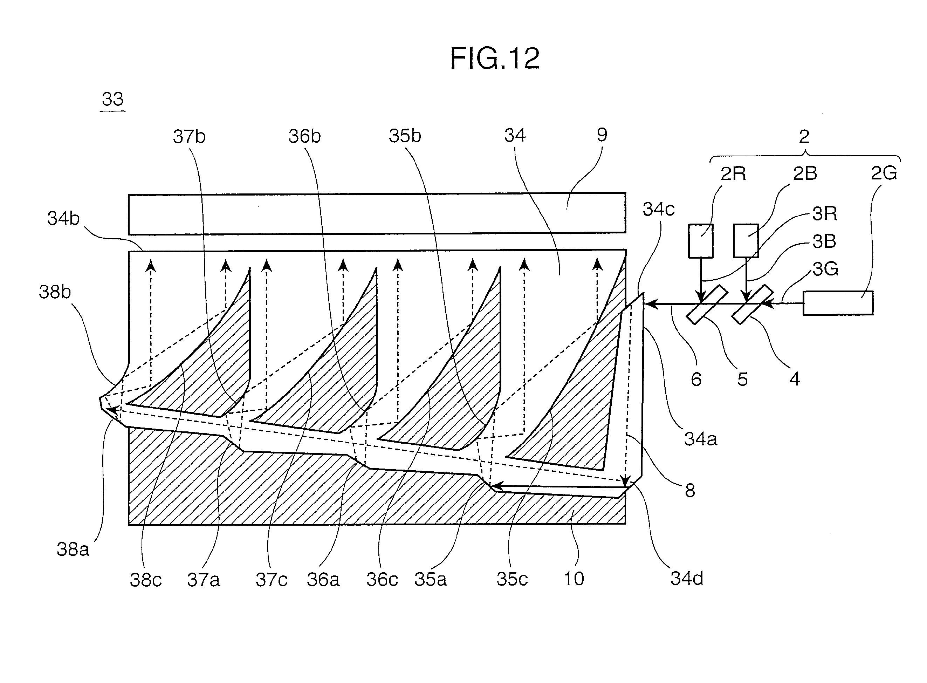

FIG. 12 shows a surface illumination device 33 according to a third embodiment of the present invention. In FIG. 12, the same constituent elements as in the first and second embodiments are identified by the same reference numerals and not described. The following description is made with reference to vertical and horizontal directions of FIG. 12.

In FIG. 12, the surface illumination device 33 includes a light guide body 34, on an incident surface 34a of which laser light 6 is incident and from an emergent surface 34b of which incident propagation light 8 emerges.

The light guide body 34 includes a reflecting surface 34c for reflecting the propagation light 8 incident on the incident surface 34a downward and a reflecting surface 34d for reflecting the propagation light 8 reflected by this reflecting surface 34c leftward. The reflecting surface 34d reflects the propagation light 8 while slightly diverging it.

The light guide body 34 includes a stepped lower surface rising toward the upper left and reflective side surfaces 35a, 36a and 37a as inclined surfaces connecting the steps of this lower surface. The light guide body 34 includes a leftward projecting part in FIG. 12 and a reflective side surface 38a as a lower surface of this projecting part. These reflective side surfaces 35a to 38a respectively reflect parts of the propagation light 8 reflected by the reflecting surface 34d upward.

The light guide body 34 is formed with four through holes penetrating in a thickness direction. Downward facing parts of side surfaces enclosing three through holes on the left side are formed into curved surfaces 35b, 36b and 37b. An upper surface of the leftward projecting part of the light guide body 34 is formed into a curved surface 38b. These curved surfaces 35b to 38b are respectively formed to have curvatures in cross-sectional shapes in a plane parallel to a principal surface 10b of a light guide plate 10 and to totally reflect the propagation light 8 reflected by the reflective side surfaces 35a to 38a rightward while diverging it.

Further, left facing parts of the side surfaces enclosing the respective through holes are respectively formed into parabolic surfaces 35c, 36c, 37c and 38c. The respective parabolic surfaces 35c to 38c are surfaces having parabolic cross-sectional shapes in a plane parallel to the principal surface 10b of the light guide body 10, more specifically surfaces which are so designed as to be able to reflect the propagation light 8 reflected by the above curved surfaces 35b to 38b as parallel light substantially perpendicular to the emergent surface 34b.

In this surface illumination device 33, the laser light 6 emitted from laser light sources 11 is introduced into the light guide body 34 through the incident surface 34a and reflected downward by the reflecting surface 34c and leftward by the reflecting surface 34d. In the process of propagating along a light guide path from the reflecting surface 34c to the reflecting surface 34d, the propagation light 8 is uniformized by propagating downward while being repeatedly reflected between the left and right side surfaces of the light guide path. The propagation light 8 is reflected leftward while being slightly diverged by the reflecting surface 34d.

The propagation light 8 reflected by the reflecting surface 34d is reflected upward by the respective reflective side surfaces 35a to 38a. The propagation light 8 reflected by the reflective side surfaces 35a to 38a is diverged and reflected rightward by the curved surfaces 35b to 38b. The propagation light 8 reflected by the curved surfaces 35b to 38b are reflected as parallel light substantially perpendicular to the emergent surface 34b by the respective parabolic surfaces 35c to 38c and incident on the connecting portion 9.

According to the surface illumination device 33 thus constructed, a light quantity distribution on the principal surface 10b of the light guide plate 10 can be more uniformized since the parallel light substantially perpendicular to the emergent surface 34b can be made to emerge from the emergent surface 34b by the respective parabolic surfaces 35c to 38c.

The reflective side surface 34c, 34d, the reflective side surfaces 35a to 38a, the curved surfaces 35b to 38b and the parabolic surfaces 35c to 38c of the light guide body 34 in the third embodiment are respectively preferably formed to totally reflect the laser light 6. Specifically, the reflective side surfaces 35a to 38a, the curved surfaces 35b to 38b and the parabolic surfaces 35c to 38c of the light guide body 34 are preferably adjusted to such angles as to be able to totally reflect the laser light 6.

On the other hand, in the case of not utilizing total reflection, coating may be applied to the reflective side surfaces 35a to 38a, the curved surfaces 35b to 38b and the parabolic surfaces 35c to 38c of the light guide body 34 to reflect the laser light 6.

### (Fourth Embodiment)

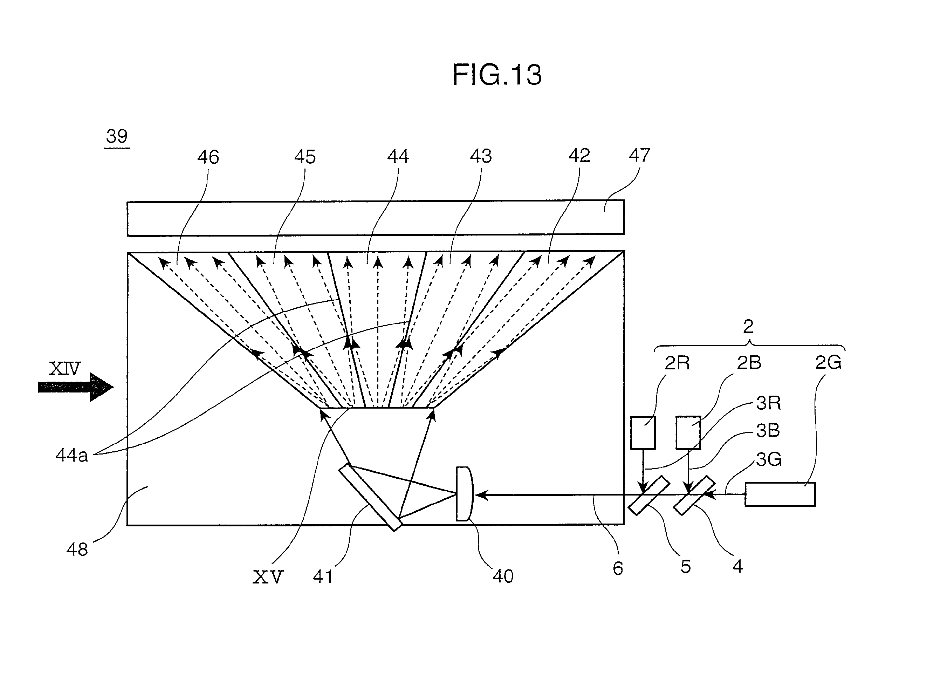

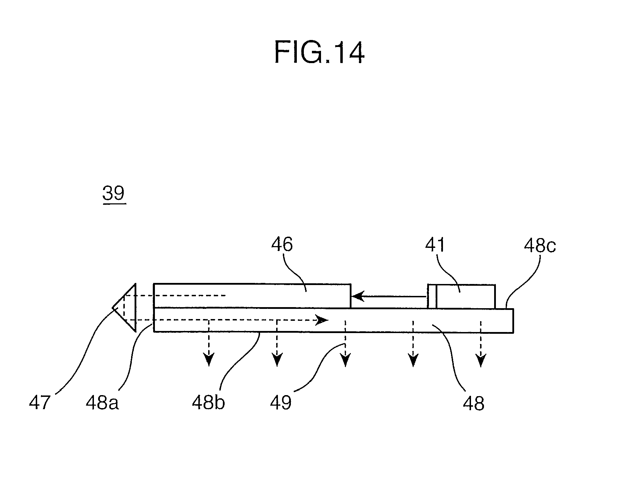

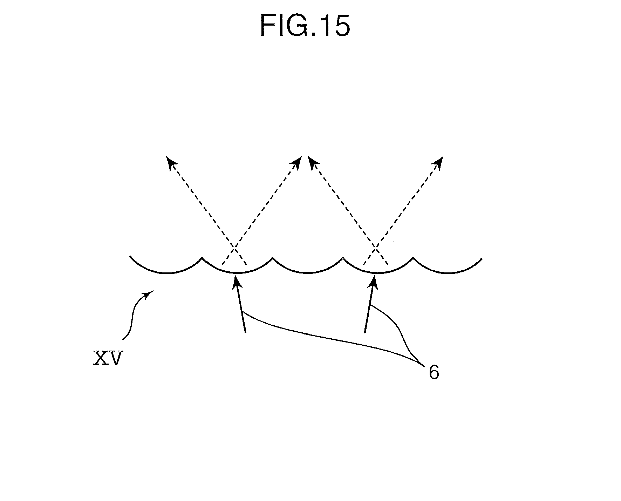

FIGS. 13, 14 and 15 show a surface illumination device 39 according to a fourth embodiment of the present invention. FIG. 13 is a schematic construction diagram of the surface illumination device 39 when viewed from behind. FIG. 14 is a side view showing a main part of the surface illumination device 39 when viewed in a direction XIV. FIG. 15 is an enlarged view of a part XV of the surface illumination device 39 of FIG. 13.

In FIGS. 13 and 14, the surface illumination device 39 is provided with laser light sources 2, dichroic mirrors 4 and 5, a cylindrical lens 40, a mirror 41, light guide bodies 42 to 46, a light guide plate 48 and a connecting portion 47.

The laser light sources 2 include a red laser light source (R light source) 2R, a green laser light source (G light source) 2G and a blue laser light source (B light source) 2B.

The dichroic mirrors 4, 5 combine red laser light (R light) 3R, green laser light (G light) 3G and blue laser light (B light) 3B emitted from the respective laser light sources 2R, 2G and 2B into laser light 6.

The cylindrical lens 40 has a curvature in a cross-sectional shape in a plane parallel to the plane of FIG. 13.

The mirror 41 is for reflecting the laser light 6 from the cylindrical lens 40 toward the respective light guide bodies 42 to 46.

The light guide bodies 42 to 46 are respectively formed to have rectangular cross sections parallel to incident surfaces (lower surfaces in FIG. 13) and to increase the widths thereof toward emergent surfaces (upper surfaces in FIG. 13).

The light guide plate 48 is so formed that light incident on a side surface 48a emerges from a principal surface 48b.

The connecting portion 47 is formed, for example, by a bar-shaped prism and introduces the light emerging from the light guide bodies 42 to 46 to the light guide plate 48.

The laser light sources 2 are constructed to emit R light 3R, G light 3G and B light 3B whose polarization directions are parallel or orthogonal to the principal surface 48b of the light guide plate 48. The laser light sources 2 are also constructed to emit R light 3R, G light 3G and blue light 3B whose polarization directions are all the same. Although not shown, collimator lenses are provided for the respective light sources 2R, 2G and 2B, so that parallel light is incident on the light guide bodies 42 to 46.

The incident surfaces of the light guide bodies 42 to 46 are one-dimensional diffusion surfaces such as holograms or lens arrays. For example, lens arrays as aggregates of cylindrical lenses are formed on the incident surfaces of the light guide bodies 42 to 46 as shown in FIG. 15.

The widths (widths in the horizontal direction of FIG. 13) of the incident surfaces of the respective light guide bodies 42 to 46 are set so that light incident on the respective light guide bodies 42 to 46 is uniform or has a specified light quantity ratio. Specifically, if the areas of the incident surfaces facing beams of the laser light 6 from the mirror 41 are increased, the light quantity of the laser light 6 incident on the light guide bodies can be increased.

On the other hand, the widths (widths in the horizontal direction of FIG. 13) of the emergent surfaces can also be set according to the quantity ratio of the light incident on the respective light guide bodies 42 to 46. Specifically, if the widths of the emergent surfaces of the respective light guide bodies 42 to 46 are increased, the light quantity per unit area of the laser light 6 emerging from the emergent surface can be decreased.

A rear surface 48c of the light guide plate 48 is so formed as to satisfy a total reflection condition in relation to an incident angle of light propagating in the light guide plate.

Next, the operation of the surface illumination device 39 thus constructed is described. In FIG. 13, the R light source 2R, the G light source 2G and the B light source 2B emit beams of laser light 3R, 3G and 3B which are, for example, polarized on a plane parallel to the plane of FIG. 13. The respective beams of laser light 3R, 3G and 3B are combined into one laser light 6 as RGB light by the dichroic mirrors 4, 5. This laser light 6 is spread in a direction parallel to the principal surface 48b of the light guide plate 48 by the cylindrical lens 40 and reflected by the mirror 17 to be introduced to the light guide bodies 42 to 46.

In the fourth embodiment, the widths of the incident surfaces of the respective light guide bodies 42 to 46 are, for example, set such that the quantities of the light received by the respective incident surfaces are equal. Accordingly, beams of laser light having substantially the same light quantity are incident on the respective light guide bodies 42 to 46.

The laser light 6 introduced to the light guide bodies 42 to 46 propagates in the light guide bodies 42 to 46 while being divided and diverged by a plurality of cylindrical lenses formed on the incident surfaces. At this time, the light diverged by the respective cylindrical lenses overlap each other in the distance. Accordingly, the intensities of the light incident on the respective cylindrical lenses are superimposed, whereby an intensity distribution of the laser light 6 at a position remote from the incident surfaces becomes substantially uniform. Out of the diverged light, rays propagating in directions largely deviated from an incidence direction are, for example, reflected by the side surface 44a, whereby propagation directions approximate to the incidence direction. Thus, an emergent angle variation of the light emerging from the light guide body 44 becomes smaller. Further, since the light guide bodies 42 to 46 are formed to have rectangular cross sections along a plane parallel to the incident surfaces thereof, the polarization of the incident light is horizontal or perpendicular to the side surfaces of the light guide bodies 42 to 46, wherefore the polarization is maintained when the light propagates in the light guide bodies.

The light emerging from the light guide bodies 42 to 46 is reflected by 180° by the connecting portion 47 and emerges from the connecting portion 47. The light emerging from the connecting portion 47 is introduced into the light guide plate 48 through the end surface 48a and scattered in the light guide plate 48 and emerges as emergent light 49 from the principal surface 48b.

The surface illumination device 39 thus constructed can realize a uniform luminance distribution by causing uniform light to be incident on the end surface 48a of the light guide plate 48. Further, the surface illumination device 39 has an advantage of being able to obtain emergent light with aligned polarization and can also be thinned.

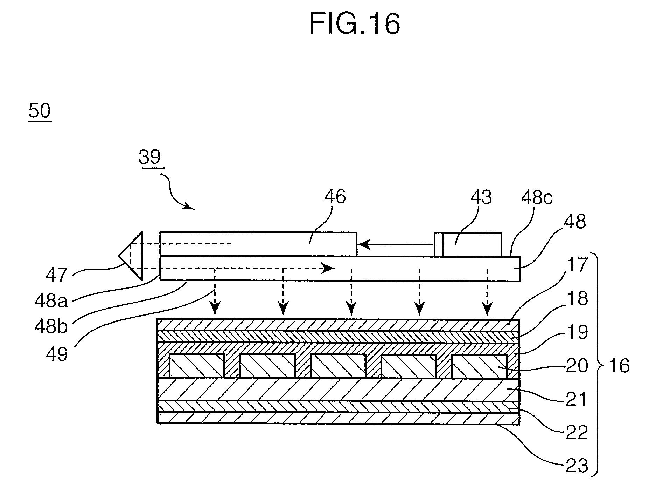

FIG. 16 shows a schematic construction of a liquid crystal display 50 using the surface illumination device 39 shown in FIGS. 13 to 15 as a backlight illumination device and shows a schematic section of a liquid crystal panel 16 in addition to the construction of FIG. 14.

The liquid crystal display 50 is provided with the liquid crystal panel 16 and the surface illumination device 39 shown in FIGS. 13 to 15. The surface illumination device 39 is not described since having the same construction as in FIGS. 13 to 15.

In FIG. 16, the liquid crystal display 16 includes a polarizing plate 17, a glass plate 18, a liquid crystal 19, RGB pixels 20, a color filter 21, a glass plate 22 and a polarizing plate 23. Here, the polarizing plate 17 is formed such that a direction of a transmission axis thereof coincides with a polarization direction of the emergent light 49 of the surface illumination device 39.

In the liquid crystal display 50 thus constructed, most of the emergent light 49 emerging from the surface illumination device 39 passes through the polarizing plate 17 and the glass plate 18 of the liquid crystal panel 16 to be modulated by the liquid crystal 19 and the RGB pixels 20. The modulated light passes through the color filter 21, the glass plate 22 and the polarizing plate 23 and is displayed as an image of the liquid crystal display 14.

The liquid crystal display 50 of this embodiment constructed as above can have high color reproducibility and can be thinned using lasers as light sources. Further, since the polarization of backlight illumination is aligned, loss of the light 49 caused by the polarizing plate 17 at the backlight side is small, wherefore low power consumption can be realized while high luminance is realized. Further, since a light quantity distribution of the emergent light 49 from the surface illumination device 39 can be uniformized, a liquid crystal display with less luminance nonuniformity and high image quality can be realized.

Although the laser light 15 is branched by the five light guide bodies 42 to 46 in this embodiment, it may not be necessarily branched into five beams. The uniformity of light emerging from the light guide plate decreases if the number of branched beams decreases, whereas losses on the incident surfaces of the light guide bodies increase if the number of branched beams increases.

Although the laser light 6 is equally branched into five beams to be incident on the light guide bodies 42 to 46, thereby uniformizing the light quantity distribution of a screen (principal surface 48b of the light guide plate 48) in this embodiment, it is also possible to increase the incident light quantity and improve luminance in the center of the screen (light guide plate 48) by increasing the width of the incident surface of the central light guide body 44 out of the respective light guide bodies 42 to 46. In other words, there are cases where viewpoints concentrate in the screen center and slight luminance reductions at ends can be ignored. By relatively reducing luminance at the screen ends in such cases, power consumption can be reduced.

Although the quantity of the light emerging from the respective light guide bodies 42 to 46 can be adjusted by adjusting the widths of the incident surfaces or emergent surfaces of the respective light guide bodies 42 to 46 in the fourth embodiment, the quantity of the light emerging from the respective light guide bodies 42 to 46 can also be adjusted by moving the cylindrical lens 16 in an optical axis direction. In other words, since the sizes of beams in relation to the incident surfaces of the respective light guide bodies 42 to 46 can be adjusted by moving the cylindrical lens 40 in the optical axis direction, the quantity of light incident on the incident surfaces of the light guide bodies 42 to 46 can be adjusted. Thus, if the cylindrical lens 40 is so moved in the optical axis direction as to increase the quantity of the light received by the incident surface of the light guide body 44, power saving can be realized by increasing the luminance in the center.

Although the bar-shaped prism is used as the connecting portion 47 in this embodiment, the connecting portion 47 may be resin-molded to be integral to the light guide plate 25 or may be resin-molded to be integral to the respective light guide bodies 42 to 46. This enables a reduction in the number of parts and a cost reduction.

Although the incident surfaces of the respective light guide bodies 42 to 46 are aligned in a direction parallel to the principal surface 48b of the light guide plate 48 in this embodiment, they may be aligned in a direction perpendicular to the principal surface 48b.

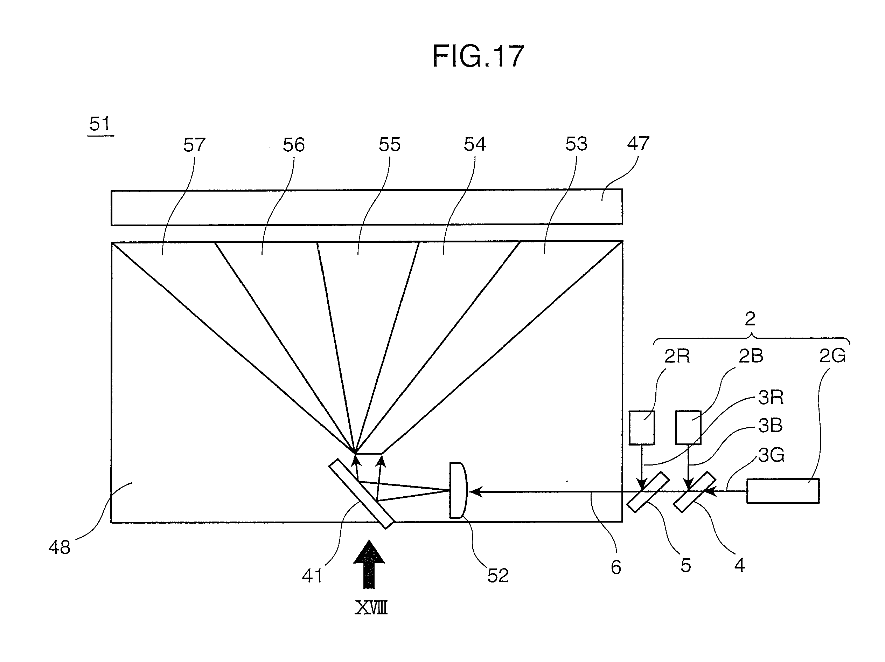

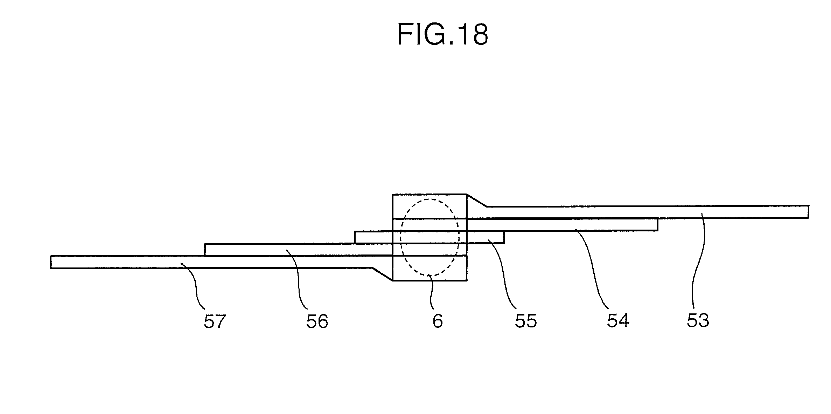

FIGS. 17 and 18 show a surface illumination device 51 constructed such that incident portions of light guide bodies overlap. FIG. 17 is a schematic construction diagram of the surface illumination device 51 when viewed from behind. FIG. 18 is a diagram of the surface illumination device 51 of FIG. 17 when viewed in a direction XVIII. It should be noted that the same construction as in the above embodiment is identified by the same reference numerals and not described.

In FIGS. 17 and 18, the surface illumination device 51 is provided with a lens 52 and light guide bodies 53 to 57.

The lens 52 is a lens formed to spread a beam of laser light 6 from laser light sources 2.

As shown in FIG. 18, the light guide bodies 53 to 57 are arranged so that incident surfaces thereof overlap in a direction (thickness direction of a light guide plate 48) perpendicular to a principal surface 48b of the light guide plate 48. In FIG. 18, the beam of the laser light 6 is shown by broken line.

In this construction as well, since the areas of the respective incident surfaces facing beams of the laser light 6 can be adjusted by changing the dimensions of the incident surfaces of the respective light guide bodies 53 to 57 in the thickness direction, the laser light 6 branched at a specified light quantity ratio can be incident on the respective light guide bodies 53 to 57. Therefore, effects similar to those of the construction shown in FIG. 1 can be obtained.

In order to clearly show that the dimensions of the incident surfaces of the respective light guide bodies 53 to 57 in the thickness direction differ, these dimensions of the respective light guide bodies 53 to 57 are shown in an exaggerated manner in FIG. 18. Accordingly, a distance from the light guide body 53 to the light guide body 57 looks long in FIG. 18, but an actual distance is such that substantially linear laser light 6 can be incident on an end surface 48a of the light guide plate 48. In order to make the laser light 6 incident on the light guide plate 48 more linear, it is also possible to design the shapes of the light guide bodies 53 to 57 so that the emergent surfaces of the respective light guide bodies 53 to 57 are arranged along the principal surface 48a of the light guide plate 48 with the incident surfaces placed one over another as shown in FIG. 18.

### (Fifth Embodiment)

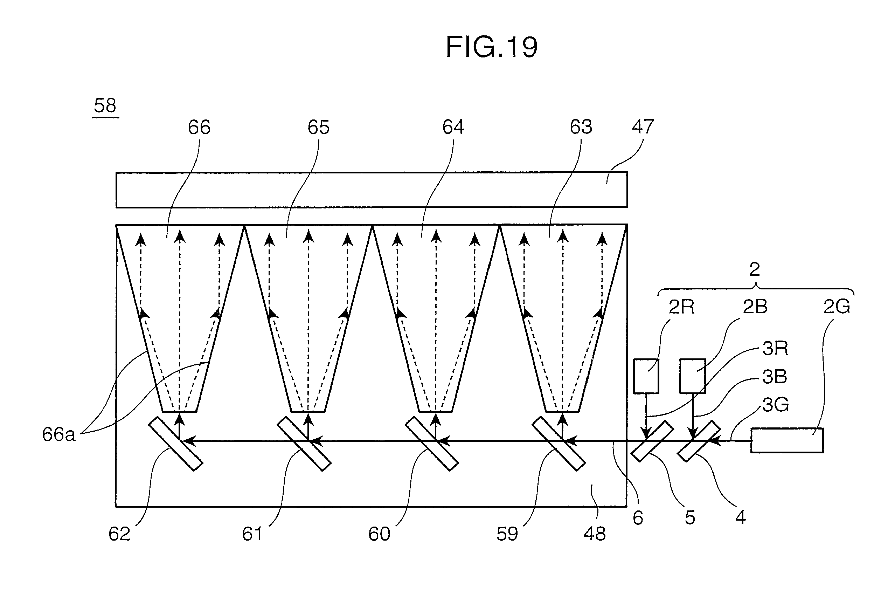

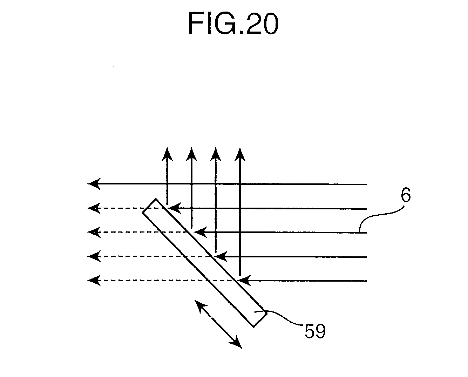

FIGS. 19 and 20 show a surface illumination device 58 according to a fifth embodiment of the present invention. FIG. 19 is a schematic construction diagram of the surface illumination device 58 when viewed from behind. FIG. 20 is a diagram showing a method for adjusting a mirror in the surface illumination device 58. The same constituent elements as in the above embodiments are identified by the same reference numerals and not described.

In FIG. 19, the surface illumination device 58 is provided with mirrors 59, 60, 61 and 62 and light guide bodies 63 to 66.

The mirrors 59, 60 and 61 are mirrors which transmit parts of laser light 6 while reflecting the remaining parts. The mirror 62 is a mirror for reflecting the laser light 6 substantially at a rate of 100 %.

The light guide bodies 63 to 66 are formed to have rectangular cross sections parallel to incident surfaces and increase widths (widths in a horizontal direction of FIG. 19) toward emergent surfaces.

The mirrors 59, 60, 61 and 62 are so arranged as to increase reflectance with distance from the laser light sources 2. In this embodiment, the reflectance of the mirror 59 is set to 25 %, that of the mirror 60 to 33 %, that of the mirror 61 to 50 % and that of the mirror 62 to 100 % as an example.

The incident surfaces of the light guide bodies 63 to 66 are one-dimensional diffusion surfaces made by holograms, lens arrays or the like similar to the first embodiment. For example, a lens array as an array of cylindrical lenses arranged at intervals smaller than the beam diameter of the laser light 6 can be used as the one-dimensional diffusion surface.

In the surface illumination device 58 thus constructed, the laser light sources 2 emit laser light 6 which is polarized on a plane parallel to the plane of FIG. 19. A part of the laser light 6 from the laser light sources 2 is reflected toward the incident surface of the light guide body 63 by the mirror 59, and the remaining part of the laser light 6 passes through the mirror 59 to be introduced to the mirror 60. A part of the laser light 6 introduced to the mirror 60 is reflected toward the incident surface of the light guide body 64 by the mirror 60 and the remaining part of the laser light 6 passes through the mirror 60 to be introduced to the mirror 61. A part of the laser light 6 introduced to the mirror 61 is reflected toward the incident surface of the light guide body 65 by the mirror 61 and the remaining part of the laser light 6 passes through the mirror 61 to be introduced to the mirror 62. The laser light 6 introduced to the mirror 62 is totally reflected toward the incident surface of the light guide body 66.

Since the reflectances of the mirrors 59 to 62 are respectively set to 25 %, 33 %, 50 % and 100 % in this way, the light quantities of the laser light 6 reflected by the respective mirrors 59 to 62 are substantially equal. Thus, substantially the same quantity of the laser light 6 is introduced to the light guide bodies 63 to 66.

The laser light 6 introduced to the light guide bodies 63 to 66 is divided by a respective plurality of cylindrical lenses formed on the incident surfaces of the respective light guide bodies 63 to 66 and propagates in the light guide bodies while being diverged. Since rays diffused from the respective cylindrical lenses in this way overlap each other in the distance, the intensities of the light incident on the respective cylindrical lenses are superimposed to produce a substantially uniform intensity distribution in the distance.

Out of the diverged light, rays propagating in directions largely deviated from an incidence direction are reflected by side surfaces 66a when the light guide body 66 is taken as an example, whereby propagation directions approximate to the incidence direction. Thus, an emergent angle variation of the light emerging from the respective light guide bodies 63 to 66 becomes smaller. Further, since the light guide bodies 63 to 66 are formed to have rectangular cross sections parallel to the incident surfaces thereof, the polarization direction of the incident light is horizontal or perpendicular to the side surfaces of the light guide bodies 63 to 66, wherefore the polarization is maintained when the light propagates in the light guide bodies.

The light emerging from the light guide bodies 63 to 66 is reflected by 180° by the connecting portion 47 and emerges from the connecting portion 47. The light emerging from the connecting portion 47 is introduced into the light guide plate 48 through the end surface 48a and scattered in the light guide plate 48 and emerges as emergent light 49 from the principal surface 48b.

The surface illumination device 58 thus constructed can realize a uniform luminance distribution by causing uniform light to be incident on the end surface 48a of the light guide plate 48. Further, the surface illumination device 58 has an advantage of being able to obtain emergent light with aligned polarization and can also be thinned.

Since the light is branched using the branching optical system comprised of the mirrors 59 to 62 in this embodiment, branching ratio accuracy is improved and the uniformity of the emergent light from the respective light guide bodies 63 to 66 is further improved.

Since the respective light guide bodies 63 to 66 are formed to increase the widths thereof from the incident surfaces toward the emergent surfaces, a variation of the emergent angle of the light from the light guide bodies 63 to 66 can be further reduced. Therefore, it is also possible to improve luminance by reducing a polarization variation of the emergent light.

Also in this embodiment, it does not matter into how many beams the light is branched.

Although the light is equally branched into beams to uniformize the luminance also in this embodiment, the reflectances of the mirrors 59 to 62 can also be set to attain a specified branching ratio. For example, it is also possible to reduce power consumption if the luminance in the central part is increased by increasing the reflectances of the mirrors 60 and 61 and the luminance in parts other than the central part is reduced by reducing the reflectances of the mirrors 59 and 62.

Since the mirrors 59 to 62 are arranged in series in this embodiment, all the reflectances of the mirrors differ. Thus, the more beams the light is branched into, the more the reflectances of the mirrors closer to the light sources need to be reduced. Therefore, there is a problem of being strongly influenced by a variation of the reflectances of the mirrors.

For example, in the case of equally branching the laser light into four beams as in this embodiment, the reflectance of the mirror 59 closest to the light sources is 25 %. If a variation of the reflectance of the mirror 59 itself is about ±2%, the reflected light quantity varies by ±8 %. Similarly, in the case of equally branching the laser light into eight beams, the reflectance of a mirror closest to the light sources is 12.5 %. If a variation of the reflectance of the mirror itself is about ±2%, the reflected light quantity varies by ±16 %.

This problem can be dealt with by adjusting the position of the mirror at the time of assembling as shown in the diagram of FIG. 20 to finely adjust the reflecting light quantity. In other words, the mirror 59 is, for example, moved away from the optical path of the laser light 6 to reduce a reflecting area if the reflectance of the mirror is higher than a designed value, whereas the position is conversely adjusted to increase the reflecting area if the reflectance is lower than the designed value. By this adjustment, a highly uniform luminance distribution can be obtained even if the reflectance of the mirror itself varies.

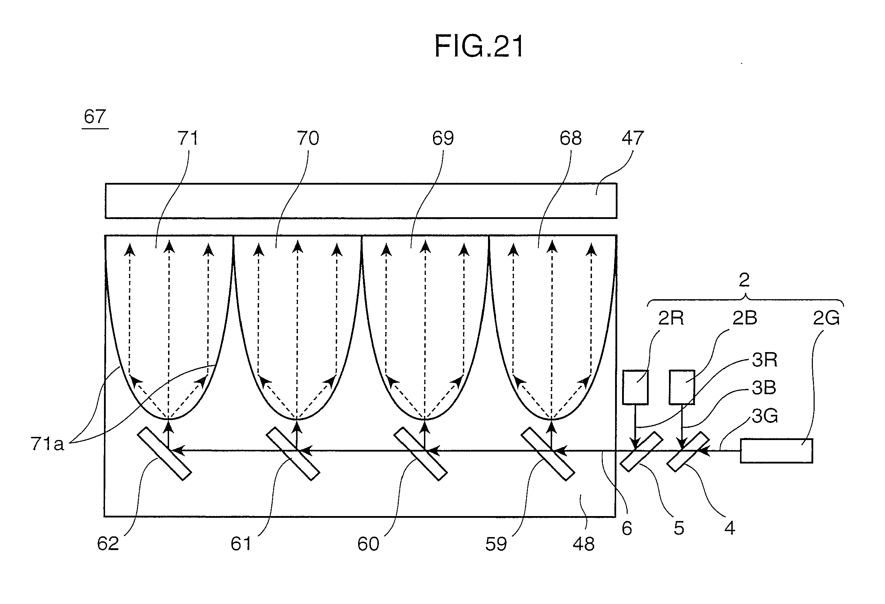

Although the light guide bodies 63 to 66 in this embodiment have substantially such trapezoidal shapes as to increase the widths toward the emergent surfaces, the side surfaces thereof may extend along parabolic contours. FIG. 21 is a schematic construction diagram of a surface illumination device 67 according to a modification when viewed from behind. Since the constituent elements other than light guide bodies 68 to 71 are the same as those shown in FIG. 19 in this modification, they are identified by the same reference numerals and not described.

The surface illumination device 67 is provided with the light guide bodies 68 to 71. The light guide bodies 68 to 71 have side surfaces whose cross sections along a plane parallel to a principal surface 48b of a light guide plate 48 are parabolic.

The light guide bodies 68 to 71 have constructions equivalent to those of the light guide bodies 63 to 66 shown in FIG. 19 except the shapes of the side surfaces. Specifically, cross sections of the light guide bodies 68 to 71 parallel to incident surfaces are rectangular. Further, the incident surfaces of the light guide bodies 68 to 71 are one-dimensional diffusion surfaces.

If the light guide body 71 is taken as an example, laser light 6 propagating in the light guide body 71 is reflected by parabolic surfaces 71a of the light guide body 71 to be deflected in a direction perpendicular to an emergent surface of the light guide body 71 (incidence direction of the laser light 6 on the light guide body 71). Thus, according to this embodiment, a variation of the emergent angle of the light emerging from the light guide bodies 68 to 71 can be further reduced, wherefore it is possible to make the light quantity of emergent light from the light guide plate 48 more uniform and reduce a variation of the polarization of the emergent light from the light guide plate 48.

Although beams of laser light 3R, 3G and 3B emitted from laser light sources 3R, 3G and 3B are branched by mirrors 59 to 62 after being combined in this embodiment, only the G light may be branched.

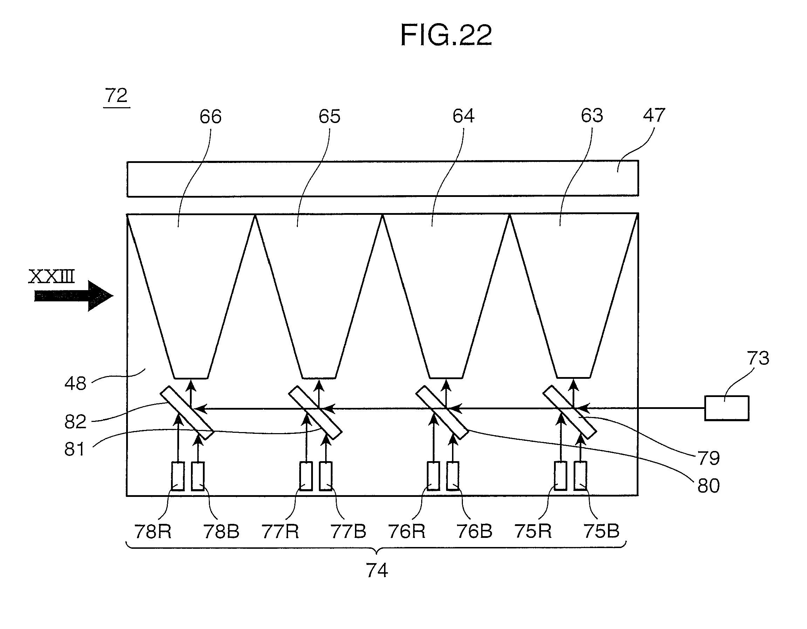

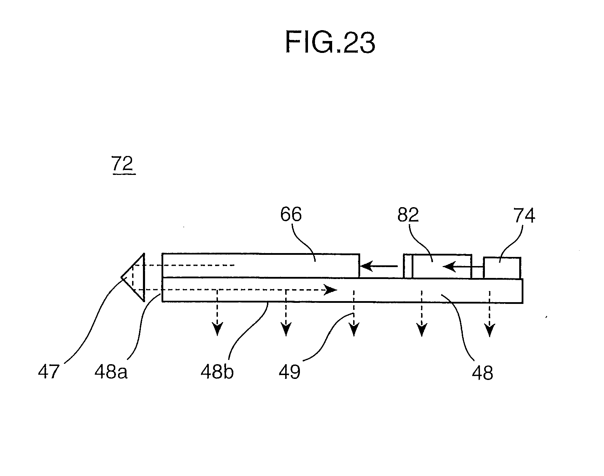

FIGS. 22 and 23 show the construction of a surface illumination device using a SHG light source as a G light source. FIG. 22 is a schematic construction diagram of a surface illumination device 72 when viewed from behind. FIG. 23 is a side view showing a main part when the surface illumination device 72 of FIG. 22 is viewed in a direction XXIII. In this modification, the same construction as in the above embodiment is identified by the same reference numerals and not described.

In FIGS. 22 and 23, the surface illumination device 72 is provided with a SHG (Second Harmonic Generation) light source 73, RB light sources 74 and mirrors 79, 80, 81 and 82.

The SHG light source 73 emits G light as a second harmonic using a wavelength conversion element.

The RB light sources 74 include red semiconductor lasers 75R, 76R, 77R and 78R and blue semiconductor lasers 75B, 76B, 77B and 78B. In this embodiment, color nonuniformity can be corrected by separately providing a plurality of R light sources and B light sources in this way.

The mirrors 79 to 82 are for branching G light and transmitting R light and B light. Specifically, the mirrors 79 to 82 are so arranged as to increase reflectance with distance from the SHG light source 73. In this modification, the reflectance of the mirror 79 is set to 25 %, that of the mirror 80 to 33 %, that of the mirror 81 to 50 % and that of the mirror 82 to 100 % as an example. All of the respective mirrors 79 to 82 transmit R light and G light at a rate of 100% to combine these R light and B light with the G light.

Although the RB light sources 74 are arranged on the rear surface of a light guide plate 48 in FIGS. 22 and 23, similar effects are obtained even if the RB light sources 74 are arranged lateral to the light guide plate 48.

### (Sixth Embodiment)

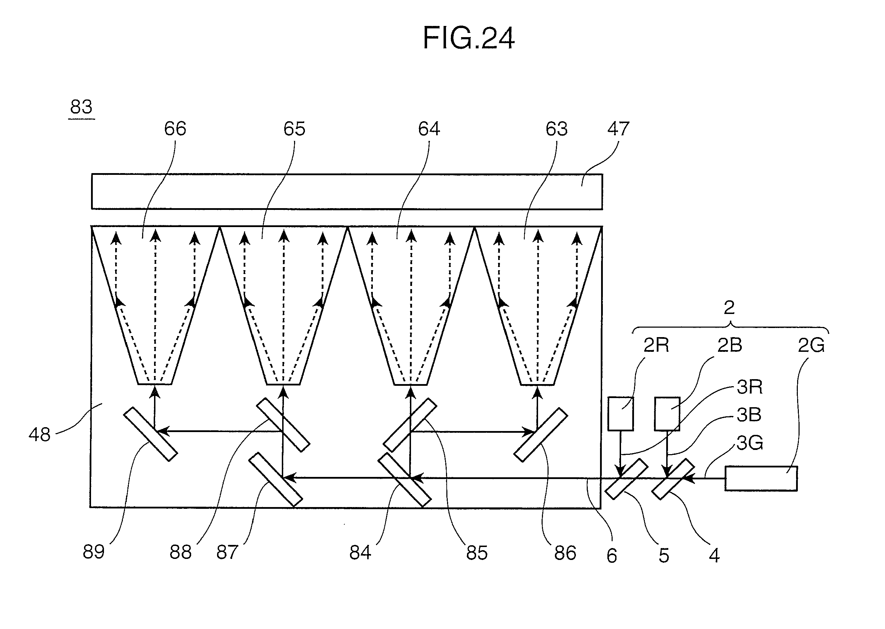

FIG. 24 shows a surface illumination device 83 according to a sixth embodiment of the present invention. In FIG. 24, the same constituent elements as in the above embodiments are identified by the same reference numerals and not described.

FIG. 24 is a schematic construction diagram of the surface illumination device 83 when viewed from behind.

The surface illumination device 83 is provided with half mirrors 84, 85 and 88 and mirrors 86, 87 and 89. The half mirrors 84, 86 and 88 are respectively half mirrors having equal transmittance and reflectance. The mirrors 86, 87 and 89 are mirrors for reflecting laser light 6 substantially at a rate of 100 %.

In the surface illumination device 83 thus constructed, laser light sources 2 emit laser light 6 which is polarized on a plane parallel to the plane of FIG. 24. A half of the laser light 6 from the laser light sources 2 is reflected by the half mirror 84 and the other half thereof passes through the half mirror 84. A half of the light reflected by the half mirror 84 passes through the half mirror 85 to be introduced to a light guide body 64. The light reflected by the half mirror 85 is reflected by the mirror 86 to be introduced to a light guide body 63.

On the other hand, a half of the laser light 6 having passed through the half mirror 84 passes through the half mirror 88 to be introduced to a light guide body 65. The laser light 6 reflected by the half mirror 88 is totally reflected by the mirror 89 to be introduced to a light guide body 67. Thus, substantially the same quantity of the laser light 6 is introduced to the light guide bodies 63 to 66.

The laser light 6 introduced to the light guide bodies 63 to 66 is diverged by a plurality of cylindrical lenses formed on the incident surfaces and uniformized in the respective light guide bodies 63 to 66. The light emerging from the light guide bodies 63 to 66 is reflected by 180° by a connecting portion 47 and introduced to a light guide plate 48 to be scattered in the light guide plate 48 and emerges as emergent light 49 from a principal surface 48b.

The surface illumination device 83 thus constructed can realize a uniform luminance distribution by causing uniform light to be incident on an end surface 48a of the light guide plate 48. Further, the surface illumination device 83 has an advantage of being able to obtain emergent light with aligned polarization and can also be thinned.

Since two types of mirrors, i.e. half mirrors and total reflection mirrors are provided unlike the fifth embodiment, parts can be easily controlled and a production cost can be reduced.

Also in this embodiment, it does not matter into how many beams the light is branched.

Since a luminance distribution can be so adjusted as to suppress luminance in parts other than the central part of the light guide plate 48 by increasing the transmittances of the half mirrors 85, 88 to improve luminance in the central part, it is also possible to realize higher luminance and lower power consumption.

Although it is supposed to fix a light branching ratio by the half mirrors and the like in this embodiment, a light quantity distribution can be made variable by changing the light branching ratio using polarization beam splitters and liquid crystal elements.

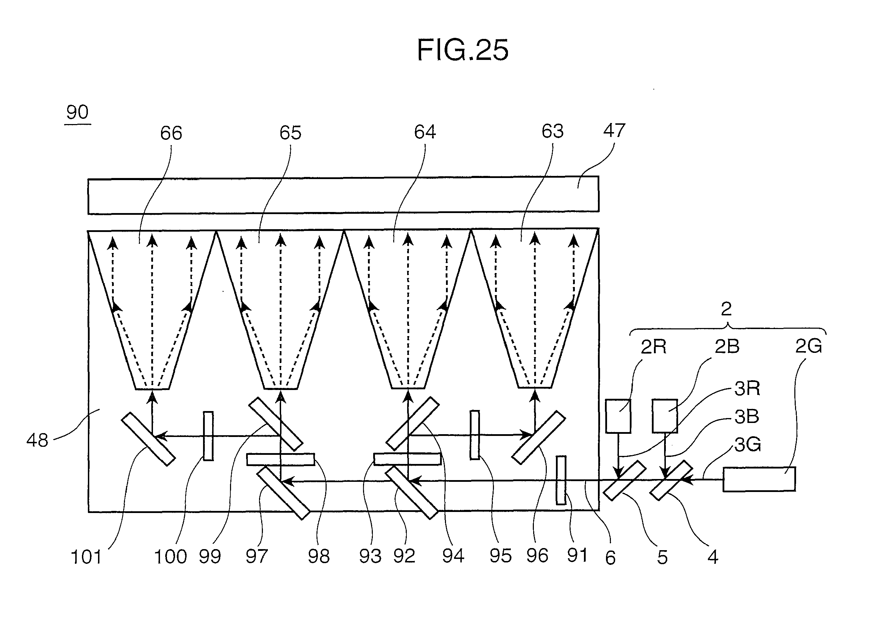

FIG. 25 shows a surface illumination device 90 with a variable light quantity distribution. In FIG. 25, the same constituent elements as in the above embodiments are identified by the same reference numerals and not described.

The surface illumination device 90 is provided with half-wave plates 91, 95 and 100, a half mirror 92, liquid crystal elements 93, 98, polarization beam splitters 94, 99 and mirrors 96, 97 and 101.

The half-wave plate 91 adjusts a polarization direction such that P-polarized light components and S-polarized light components are substantially equal.

The liquid crystal elements 93, 98 can control a polarization rotation amount.

The polarization beam splitters 94, 99 transmit P-polarized light and reflect S-polarized light.

The half-wave plates 95, 100 convert the S-polarized light reflected by the polarization beam splitters 94, 99 into P-polarized light.

The surface illumination device 90 constructed as above can change a transmission/reflection ratio in the polarization beam splitters 94, 99 and can control the light quantity distribution by controlling the polarization rotation amount of the laser light 6 using the liquid crystal elements 93, 98.

Although the polarization rotation amount of the laser light 6 is controlled using the liquid crystal elements 93, 98 in this surface illumination device 90, the polarization rotation amount of the laser light 6 can also be adjusted by rotating the half-wave plate 91 about a specified axis of rotation. If this construction is employed, similar effects can be obtained while the liquid crystal elements 93, 98 are omitted, wherefore a cost reduction can be realized.

### (Seventh Embodiment)

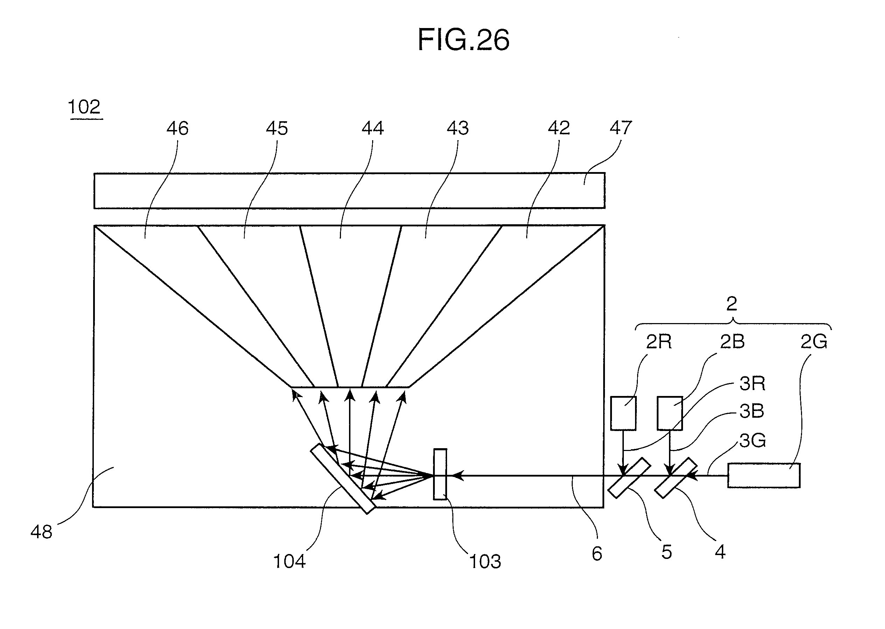

FIG. 26 shows a surface illumination device 102 according to a seventh embodiment of the present invention. In FIG. 26, the same constituent elements as in the above embodiments are identified by the same reference numerals and not described.

FIG. 26 is a schematic construction diagram of the surface illumination device 102 when viewed from behind.

The surface illumination device 102 is provided with a diffraction grating 103 and a mirror 104.

In the surface illumination device 102 thus constructed, laser light sources 2 emit laser light 6 which is polarized on a plane parallel to the plane of FIG. 26. The laser light 6 from the laser light sources 2 is branched into five beams at a specified light quantity ratio by the diffraction grating 103 and reflected by the mirror 104 to be introduced light guide bodies 42 to 46.

The laser light 6 introduced to the light guide bodies 42 to 46 propagates while being diverged in the light guide bodies 42 to 46 by one-dimensional diffusion surfaces formed on incident surfaces of the light guide bodies 42 to 46, thereby being uniformized, and emerges. The laser light emerging from the light guide bodies 42 to 46 is reflected by 180° by a connecting portion 47 and introduced to a light guide plate 48 to be scattered in the light guide plate 25 and emerges as emergent light 49 from a principal surface 48b.

The surface illumination device 102 thus constructed can emit laser light having a specified luminance distribution from the principal surface 48b of the light guide plate 48 by causing laser light having a specified luminance distribution to be incident on the end surface 48a of the light guide plate 48. Further, the surface illumination device 102 has an advantage of being able to obtain emergent light with aligned polarization and can also be thinned.

This embodiment can be very inexpensively constructed since the diffraction grating is used for optical branching.

### (Eighth Embodiment)

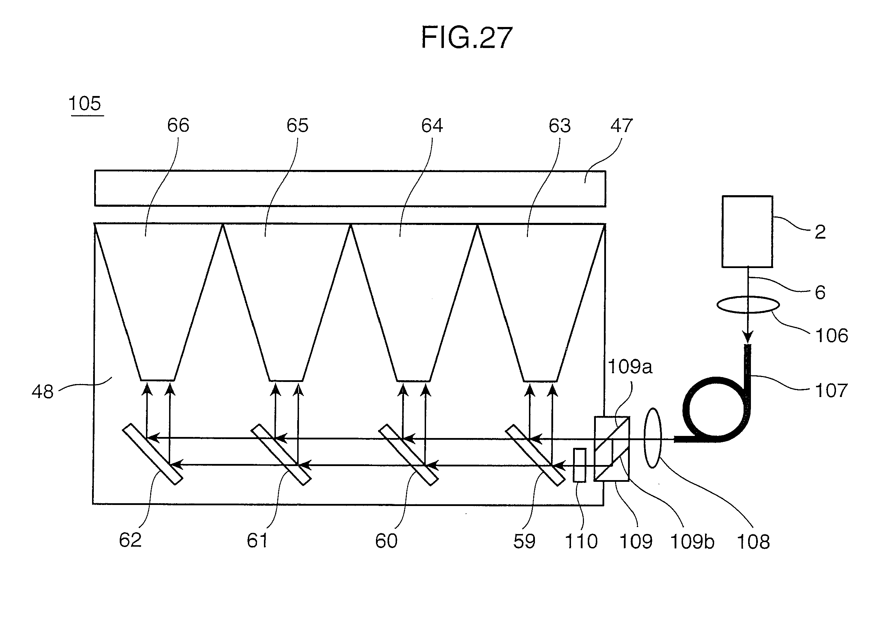

FIG. 27 shows a surface illumination device 105 according to an eighth embodiment of the present invention. In FIG. 27, the same constituent elements as in the above embodiments are identified by the same reference numerals and not described.

FIG. 27 is a schematic construction diagram of the surface illumination device 105 when viewed from behind.

The surface illumination device 105 is provided with a condenser lens 106, an optical fiber 107, a collimator lens 108, a compound prism 109 and a half-wave plate 110.

The compound prism 109 includes a polarization beam splitter surface 109a and a reflecting surface 109b.

The half-wave plate 110 rotates the polarization of laser light 6 reflected by the reflecting surface 109b of the compound prism 109 by 90°.

In the surface illumination device 105 thus constructed, laser light 6 emitted from laser light sources 2 is condensed by the condenser lens 106 and transmitted via the optical fiber 107. The laser light 6 emerging from the optical fiber 107 is converted into parallel light by the collimator lens 108 to be incident on the compound prism 109.

P-polarized light components of the laser light 6 incident on the compound prism 109 pass through the polarization beam splitter surface 109a and emerge from the compound prism 109. S-polarized light components of the laser light 6 incident on the compound prism 109 are reflected by the polarization beam splitter surface 109a and also reflected by the polarization beam splitter surface 109b and emerge from the compound prism 109.

The laser light 6 emerging from the compound prism 109 has the polarization rotated by 90° by the half-wave plate 110 to become P-polarized light.

In other words, all the laser light 6 introduced to the mirrors 59 to 62 is converted into P-polarized light (polarized light on a plane parallel to the plane of FIG. 27) by the compound prism 109 and the half-wave plate 110.

As described above, the laser light 6 is introduced to the respective light guide bodies 63 to 66 by passing through the mirrors 59 to 61 or being reflected by the mirrors 59 to 62. The laser light 6 introduced to the light guide bodies 63 to 66 propagates in the light guide bodies while being diverged by one-dimensional diffusion surfaces formed on incident surfaces of the light guide bodies 63 to 66 and, then, is uniformized and emerges from the light guide bodies 63 to 66. The laser light emerging from the light guide bodies 63 to 66 is reflected by 180° by a connecting portion 47 and introduced to a light guide plate 48 to be scattered in the light guide plate 48 and emerges as emergent light 49 from a principal surface 48b.

The surface illumination device 105 thus constructed can emit light having a specified luminance distribution from the principal surface 48b of the light guide plate 48 by causing light having a specified luminance distribution to be incident on the end surface 48a of the light guide plate 48. Further, the surface illumination device 105 has an advantage of being able to obtain emergent light with aligned polarization and can also be thinned.

Since the light from the laser light sources 2 is transmitted using the optical fiber 107 in this embodiment, there is a degree of freedom in the layout of the light sources, which can contribute to miniaturization and thinner construction.

A liquid crystal display as shown in FIG. 16 in the fourth embodiment can be constructed using the surface illumination device shown in any one of the fifth to eighth embodiments as a backlight illumination device. If this construction is employed, a liquid crystal display can be realized which has good color reproducibility, high luminance and less luminance nonuniformity even when having a large screen. It is also possible to realize a thin liquid crystal display.

Although the light sources emit laser light in the above first to eighth embodiments, it is also possible to use LED light sources on the condition that an optical path between the light sources and the light guide body(s) is shortened. For example, LED light sources can be relatively easily employed for the construction shown in FIGS. 1 to 3, that shown in FIGS. 13 to 15 or that shown in FIGS. 17 and 18.

The above specific embodiments mainly embrace inventions having the following constructions.

A surface illumination device according to one aspect of the present invention comprises a light source for emitting irradiation light; a light guide plate having an end surface on which the irradiation light from the light source is incident and a principal surface from which the irradiation light incident on the end surface emerges; and a light guide body capable of introducing the irradiation light to the end surface of the light guide plate while branching the irradiation light so that the irradiation light before being incident on the end surface of the light guide plate has a specified light quantity distribution in a longitudinal direction of the end surface.

According to the present invention, the surface illumination device can have high luminance and no luminance nonuniformity and can be thinned.

In the above surface illumination device, it is preferable that the light guide body has an incident surface on which the irradiation light is incident, an emergent surface from which the irradiation light incident on the incident surface emerges and a reflective side surface for reflecting the irradiation light between the incident surface and the emergent surface; that the reflective side surface includes an outer side surface forming the light guide body; and that at least one of the incident surface and the reflective side surface is formed to branch the irradiation light in a plurality of optical paths.

According to this construction, since the light of the light source can be converted into linear light and made incident on the light guide plate only by the plate-like light guide body, it is possible to realize a thin and low-cost surface illumination device. Further, since total reflection is utilized to deflect the light propagating in the light guide body, light loss is small and light utilization efficiency can be improved.

For example, the reflective side surface can be formed by an outer side surface of the light guide body or an inner side surface of a through hole or a groove formed in the light guide body.

In the above surface illumination device, it is preferable that a plurality of optical paths for introducing the irradiation light are set in the light guide body; and that the reflective side surface is arranged obliquely to the optical paths to totally reflect the irradiation light.

According to this construction, the irradiation light can be effectively branched and introduced to the light guide plate utilizing the light guide body by setting the optical paths and the reflective side surface in the light guide body beforehand such that the irradiation light can be totally reflected.

In the above surface illumination device, the reflective side surface is preferably a curved surface capable of diverging the irradiation light incident on the incident surface in a one-dimensional direction.

According to this construction, the light of the light source can be converted into linear light utilizing only the light guide body without using an optical system such as a lens or a scanning optical system, wherefore a cost reduction can be realized.

In the above surface illumination device, at least a part of the reflective side surface is preferably a curved surface with a parabolic cross section for reflecting the irradiation light incident on the incident surface as parallel light substantially perpendicular to the end surface of the light guide plate.

According to this construction, since the irradiation light can be introduced as parallel light to the light guide plate, a light quantity distribution of the light emerging from a principal surface of the light guide plate can be stabilized.

In the above surface illumination device, it is preferable that the light guide body includes a light guide path capable of uniformizing the irradiation light by repeatedly reflecting the irradiation light inside; that the reflective side surface branches the irradiation light in a plurality of optical paths by reflecting a part of the irradiation light having passed the light guide path or reflecting the irradiation light in a plurality of different directions; and that the irradiation light is branched at a specified light quantity ratio by the reflective side surface and introduced to the emergent surface of the light guide body and emerges with a specified light quantity distribution from the emergent surface.

According to this construction, the linear light emerging from the light guide body can be uniform or have a desired light quantity distribution in the longitudinal direction of the end surface of the light guide plate.

In the above surface illumination device, it is preferable that the light source is a laser light source for emitting laser light; and that the surface illumination device further comprises a one-dimensional diffusion member for causing the laser light from the laser light source to be incident on the light guide body while diffusing the laser light in a one-dimensional direction.

According to this construction, the irradiation light can be uniformly spread to a certain extent before being incident on the light guide body. Thus, if the irradiation light incident on the light guide body is converted into parallel light by the light guide body and perpendicularly incident on the end surface of the light guide plate, a more uniform surface illumination device can be realized. Further, if parallel light substantial perpendicular to the end surface of the light guide plate emerges from the light guide body, it is possible to reduce not only a variation of an incident angle of the light incident on the light guide plate, but also a variation of a polarization direction of the light emerging from the light guide plate. Therefore, if light passes through a polarizing plate such as a liquid crystal panel, the light quantity of the light having passed through the polarizing plate can be more uniform.

In the above surface illumination device, the one-dimensional diffusion member preferably includes a polygon mirror.

In the above surface illumination device, the one-dimensional diffusion member preferably includes a curved mirror capable of diffusing the laser light in the one-dimensional direction.

According to these constructions, the irradiation light can be more uniformly spread. Further, in the case of employing the polygon mirror, speckle noise can be removed. On the other hand, in the case of employing the curved mirror, a cost increase can be suppressed.

In the above surface illumination device, it is preferable that a plurality of light guide bodies are provided; that each light guide body has an incident surface on which the irradiation light is incident and an emergent surface from which the irradiation light incident on the incident surface emerges; and that the incident surfaces of the respective light guide bodies are so arranged as to divide beams of the irradiation light into regions, whereby the irradiation light is branched to be incident on the respective light guide bodies.

According to this construction, since the irradiation light can be branched by a simple construction without using any special optical element, a thin, light and low-cost surface illumination device can be realized.

In the above surface illumination device, it is preferable that an optical element having a function of converging or diverging the beams of the irradiation light is further provided between the light source and the plurality of light guide bodies; and that a branching ratio of the light quantity of the irradiation light on the respective incident surfaces is adjusted by moving the optical element in an optical axis direction of the irradiation light to adjust beam diameters on the incident surfaces of the light guide bodies, thereby adjusting the light quantity distribution of the irradiation light incident on the light guide plate.

According to this construction, the light quantity distribution of the irradiation light incident on the light guide plate can be adjusted by moving the optical element in the optical axis direction of the irradiation light. Thus, for example, in the case of using the above surface illumination device as a backlight of an image display, power consumption can be reduced by suitably increasing luminance in a screen central part while suitably reducing luminance in a peripheral part.

In the above surface illumination device, the widths or thicknesses of the incident surfaces of the respective light guide bodies may be set according to the light quantity distributions of the irradiation light on the respective incident surfaces so that the quantities of the irradiation light incident on the respective plurality of light guide bodies are equal.

Further, in the above surface illumination device, the widths of the emergent surfaces of the plurality of light guide bodies may be set according to a light quantity ratio of the irradiation light incident on the plurality of light guide bodies.

According to these constructions, a surface illumination device with a uniform luminance distribution can be realized since the quantity per unit width of the light incident on the light guide plate can be constant.

In the above surface illumination device, it is preferable that a plurality of light guide bodies are provided; that each light guide body has an incident surface on which the irradiation light is incident and an emergent surface from which the irradiation light incident on the incident surface emerges; and that the surface illumination device further comprises a beam splitter capable of branching the irradiation light from the light source by transmitting and reflecting it and introducing it to the incident surfaces of the respective light guide bodies.

According to this construction, a surface illumination device with a uniform luminance distribution can be realized since the irradiation light can be branched with higher accuracy.

In the above surface illumination device, the beam splitter preferably includes a first half mirror having equal transmittance and reflectance and a second half mirror and a third half mirror respectively arranged in an optical path of transmitted light and an optical path of reflected light of the first half mirror and branches the irradiation light from the light source at least into four beams by the first, second and third half mirrors.

According to this construction, the irradiation light can be branched with higher accuracy and branching can be realized only by the half mirrors and total reflection mirrors, wherefore parts can be easily controlled and a production cost increase can be suppressed.

In the above surface illumination device, the first, second and third half mirrors are so formed that reflecting surfaces thereof are respectively movable relative to an optical path of the irradiation light from the light source, so that reflected light quantities to be incident on the incident surfaces of the respective light guide bodies are adjustable.

According to this construction, a surface illumination device with higher uniformity can be realized since the reflecting light quantities to be incident on the light guide bodies can be adjusted even if the reflectance of the beam splitter or those of the half mirrors vary.

In the above surface illumination device, it is preferable that the beam splitter includes a polarization beam splitter for transmitting or reflecting the irradiation light according to a polarization direction of the irradiation light and a liquid crystal element capable of controlling a polarization rotation amount of the irradiation light; and that a branching ratio of the irradiation light can be controlled by controlling the polarization rotation amount using the liquid crystal element.

According to this construction, the luminance distribution can be freely set even after the shipment of a product. For example, the luminance distribution can be changed according to an image to be displayed and a user can set a power saving mode based on his preference.

In the above surface illumination device, it is preferable that the light source includes one green light source for irradiating green irradiation light, as many red light sources as the light guide bodies for irradiating red irradiation light and as many blue light sources as the light guide bodies for irradiating blue irradiation light; that the beam splitter includes a plurality of mirrors provided in correspondence with the respective light guide bodies; and that the respective mirrors combines the irradiation light from the red and blue light sources with the green irradiation light by reflecting a part of the green irradiation light while introducing the remaining part to the other mirrors to introduce the green irradiation light to the incident surfaces of the respective light guide bodies and transmitting the red and blue irradiation light.

According to this construction, color nonuniformity can be corrected for red light and blue light by adjusting the light quantity for each region or each of the plurality of light guide bodies.

In the above surface illumination device, it is preferable that a plurality of light guide bodies are provided; that each light guide body has an incident surface on which the irradiation light is incident and an emergent surface from which the irradiation light incident on the incident surface emerges; and that the surface illumination device further comprises a diffraction grating capable of branching the irradiation light from the light source by diffracting the irradiation light and introducing the irradiation light to the incident surfaces of the respective light guide bodies.

According to this construction, a very inexpensive construction is possible since the diffraction grating is used to branch the light.

In the above construction, it is preferable that the light guide bodies are arranged on the rear surface of the light guide plate; and that the emergent surface of each light guide body includes two reflecting surfaces inclined substantially at 45° to the principal surface of the light guide plate so that the light propagating in the light guide body is incident on the light guide plate after being reflected by 180°.

According to this construction, it is possible to reduce the number of parts and realize a cost reduction as compared with the case where a member for introducing light emerging from the light guide bodies to the end surface of the light guide plate is separately provided.

In the above construction, it is preferable that the surface illumination device further comprises an optical fiber for transmitting the light from the light source, a polarization beam splitter for polarizing and splitting the light emerging from the optical fiber and a half-wave plate for rotating the polarization of the light having passed through or reflected by the polarization beam splitter; and that the light polarized and split by the polarization beam splitter is incident on the branching portion.

According to this construction, a degree of freedom can be given in the layout of the light sources and miniaturization and a thinner construction can be realized.

In the above construction, light sources for respectively emitting at least red light, green light and blue light can be used as the laser light sources.

According to this construction, a surface illumination device for realizing a display with high luminance and a wide color reproduction range can be constructed.

In the above surface illumination device, the light guide bodies are preferably formed to increase the widths thereof from the incident surfaces toward the emergent surfaces.

According to this construction, since the light guide bodies are formed to be gradually wider in a propagation direction of the irradiation light, an incident angle of the irradiation light can be large even if the irradiation light is reflected by the side surfaces of the light guide bodies facing in the width direction. Thus, according to the above construction, the irradiation light introduced to the side surfaces of the light guide bodies can be reflected at angles approximate to those perpendicular to the emergent surfaces of the light guide bodies, wherefore a luminance distribution of the light guide plate receiving the irradiation light from these light guide bodies can be more precisely set to a specified luminance distribution.

In the above surface illumination device, it is preferable that each light guide body includes side surfaces perpendicular to the principal surface of the light guide plate; and that at least parts of the side surfaces have parabolic shapes.

According to this construction, the luminance distribution on the principal surface of the light guide plate can be more precisely set to the specified luminance distribution since a variation of the light incident angle on the light guide plate can be reduced. Further, a liquid crystal display with higher luminance can be realized when the surface illumination device is combined with a liquid crystal panel since a variation of the polarization of the light emerging from the principal surface of the light guide plate can also be suppressed.

In the above surface illumination device, it is preferable that the light guide body has an incident surface on which the irradiation light is incident and an emergent surface from which the irradiation light incident on the incident surface emerges; and that the incident surface is a curved surface for diverging the irradiation light incident on the incident surface in a one-dimensional direction.

According to this construction, the luminance distribution of the light guide plate can be more precisely set to the specified luminance distribution since the light having propagated in the light guide body can be incident on the light guide plate in a more uniform state.

In the above surface illumination device, a polarization direction of the irradiation light introduced by the light guide body is preferably set parallel or perpendicular to the principal surface of the light guide plate.

According to this construction, light with aligned polarization can emerge from the light guide plate since the polarization of the light incident on the light guide plate is aligned. Therefore, a liquid crystal display with higher luminance can be realized when this surface illumination device and a liquid crystal panel are combined.

In the above surface illumination device, it is preferable that the light guide body is in the form of a plate having an incident surface on which the irradiation light is incident and an emergent surface from which the irradiation light incident on the incident surface emerges; that the surface illumination device further comprises a connecting portion arranged on the rear surface of the light guide plate for causing the light emerging from the emergent surface of the light guide body to be incident on the end surface of the light guide plate by returning the light; that the light guide body is so tapered as to increase the thickness thereof toward the connecting portion; and that the connecting portion introduces the light incident thereon to the end surface of the light guide plate by totally reflecting the light at least twice.

According to this construction, by totally reflecting the irradiation light from the light guide body at least twice, the optical path of the irradiation light can be returned from the light guide body arranged on the rear surface to the light guide plate on the front surface while reducing loss resulting from reflection. Thus, light utilization efficiency can be improved. Further, since total reflection is utilized to return the optical path in the connecting portion, mirror coating is unnecessary and a cost reduction can also be realized.

In the above surface illumination device, it is preferable that the light source includes an SHG light source for emitting green light, a red light source for emitting red light and a blue light source for emitting blue light; and that the red and blue light sources are arranged lateral to the light guide plate.

According to this construction, color nonuniformity can be corrected since the irradiation light by the red and blue light sources can be individually adjusted.

A liquid crystal display according to another aspect of the present invention comprises a liquid crystal panel and a backlight illumination device for illuminating the liquid crystal panel from behind, wherein the above surface illumination device is used as the backlight illumination device.

According to the present invention, a liquid crystal display can be realized which has good color reproducibility, high luminance and little luminance nonuniformity even when having a large screen. Further, it is also possible to realize a thin liquid crystal display.

In the above construction, it is preferable that a plurality of deflection grooves parallel to the end surface are formed in the rear surface of the light guide plate facing the principal surface and deflect light incident on the light guide plate by totally reflecting the light toward the principal surface.

According to this construction, light utilization efficiency can be improved upon the combination with the liquid crystal panel since light with aligned polarization can emerge from the light guide plate.

### INDUSTRIAL APPLICABILITY

A surface illumination device of the present invention and a liquid crystal display using the same are useful in the display field such as large-size displays and high-luminance displays.

## Claims

1. A surface illumination device, comprising:
a light source for emitting irradiation light;
a light guide plate having an end surface on which the irradiation light from the light source is incident and a principal surface from which the irradiation light incident on the end surface emerges; and
a light guide body capable of introducing the irradiation light to the end surface of the light guide plate while branching the irradiation light so that the irradiation light before being incident on the end surface of the light guide plate has a specified light quantity distribution in a longitudinal direction of the end surface.

2. A surface illumination device according to claim 1, wherein:
the light guide body has an incident surface on which the irradiation light is incident, an emergent surface from which the irradiation light incident on the incident surface emerges and a reflective side surface for reflecting the irradiation light between the incident surface and the emergent surface;
the reflective side surface includes an outer side surface forming the light guide body; and
at least one of the incident surface and the reflective side surface is formed to branch the irradiation light in a plurality of optical paths.

3. A surface illumination device according to claim 2, wherein:
a plurality of optical paths for introducing the irradiation light are set in the light guide body; and
the reflective side surface is arranged obliquely to the optical paths to totally reflect the irradiation light.

4. A surface illumination device according to claim 2 or 3, wherein the reflective side surface is a curved surface capable of diverging the irradiation light incident on the incident surface in a one-dimensional direction.

5. A surface illumination device according to claim 2 or 3, wherein at least a part of the reflective side surface is a curved surface with a parabolic cross section for reflecting the irradiation light incident on the incident surface as parallel light substantially perpendicular to the end surface of the light guide plate.

6. A surface illumination device according to any one of claims 2 to 5, wherein:
the light guide body includes a light guide path capable of uniformizing the irradiation light by repeatedly reflecting the irradiation light inside;
the reflective side surface branches the irradiation light in a plurality of optical paths by reflecting a part of the irradiation light having passed the light guide path or reflecting the irradiation light in a plurality of different directions; and
the irradiation light is branched at a specified light quantity ratio by the reflective side surface and introduced to the emergent surface of the light guide body and emerges with a specified light quantity distribution from the emergent surface.

7. A surface illumination device according to any one of claims 2 to 6, wherein:
the light source is a laser light source for emitting laser light; and
the surface illumination device further comprises a one-dimensional diffusion member for causing the laser light from the laser light source to be incident on the light guide body while diffusing the laser light in a one-dimensional direction.

8. A surface illumination device according to claim 7, wherein the one-dimensional diffusion member includes a polygon mirror.

9. A surface illumination device according to claim 7, wherein the one-dimensional diffusion member includes a curved mirror capable of diffusing the laser light in the one-dimensional direction.

10. A surface illumination device according to claim 1, wherein:
a plurality of light guide bodies are provided;
each light guide body has an incident surface on which the irradiation light is incident and an emergent surface from which the irradiation light incident on the incident surface emerges; and
the incident surfaces of the respective light guide bodies are so arranged as to divide beams of the irradiation light into regions, whereby the irradiation light is branched to be incident on the respective light guide bodies.

11. A surface illumination device according to claim 10, further comprising an optical element provided between the light source and the plurality of light guide bodies and having a function of converging or diverging the beams of the irradiation light, wherein a branching ratio of the light quantity of the irradiation light on the respective incident surfaces is adjusted by moving the optical element in an optical axis direction of the irradiation light to adjust beam diameters on the incident surfaces of the light guide bodies, thereby adjusting the light quantity distribution of the irradiation light incident on the light guide plate.

12. A surface illumination device according to claim 10 or 11, wherein the widths or thicknesses of the incident surfaces of the respective light guide bodies are set according to the light quantity distributions of the irradiation light on the respective incident surfaces so that the quantities of the irradiation light incident on the respective plurality of light guide bodies are equal.

13. A surface illumination device according to any one of claims 10 to 12, wherein the widths of the emergent surfaces of the plurality of light guide bodies are set according to a light quantity ratio of the irradiation light incident on the plurality of light guide bodies.

14. A surface illumination device according to claim 1, wherein:
a plurality of light guide bodies are provided;
each light guide body has an incident surface on which the irradiation light is incident and an emergent surface from which the irradiation light incident on the incident surface emerges; and
the surface illumination device further comprises a beam splitter capable of branching the irradiation light from the light source by transmitting and reflecting it and introducing the irradiation light to the incident surfaces of the respective light guide bodies.

15. A surface illumination device according to claim 14, wherein the beam splitter includes a first half mirror having equal transmittance and reflectance and a second half mirror and a third half mirror respectively arranged in an optical path of transmitted light and an optical path of reflected light of the first half mirror and branches the irradiation light from the light source at least into four beams by the first, second and third half mirrors.

16. A surface illumination device according to claim 15, wherein the first, second and third half mirrors are so formed that reflecting surfaces thereof are respectively movable relative to an optical path of the irradiation light from the light source, so that reflected light quantities to be incident on the incident surfaces of the respective light guide bodies are adjustable.

17. A surface illumination device according to claim 14, wherein:
the beam splitter includes a polarization beam splitter for transmitting or reflecting the irradiation light according to a polarization direction of the irradiation light and a liquid crystal element capable of controlling a polarization rotation amount of the irradiation light; and
a branching ratio of the irradiation light can be controlled by controlling the polarization rotation amount using the liquid crystal element.

18. A surface illumination device according to claim 14, wherein:
the light source includes one green light source for irradiating green irradiation light, as many red light sources as the light guide bodies for irradiating red irradiation light and as many blue light sources as the light guide bodies for irradiating blue irradiation light;
the beam splitter includes a plurality of mirrors provided in correspondence with the respective light guide bodies; and
the respective mirrors combines the irradiation light from the red and blue light sources with the green irradiation light by reflecting a part of the green irradiation light while introducing the remaining part to the other mirrors to introduce the green irradiation light to the incident surfaces of the respective light guide bodies and transmitting the red and blue irradiation light.

19. A surface illumination device according to claim 1, wherein:
a plurality of light guide bodies are provided;
each light guide body has an incident surface on which the irradiation light is incident and an emergent surface from which the irradiation light incident on the incident surface emerges; and
the surface illumination device further comprises a diffraction grating capable of branching the irradiation light from the light source by diffracting the irradiation light and introducing the irradiation light to the incident surfaces of the respective light guide bodies.

20. A surface illumination device according to any one of claims 10 to 19, wherein the light guide bodies are formed to increase the widths thereof from the incident surfaces toward the emergent surfaces.

21. A surface illumination device according to any one of claims 10 to 20, wherein:
each light guide body includes side surfaces perpendicular to the principal surface of the light guide plate; and
at least parts of the side surfaces have parabolic shapes.

22. A surface illumination device according to claim 1, wherein:
the light guide body has an incident surface on which the irradiation light is incident and an emergent surface from which the irradiation light incident on the incident surface emerges; and
the incident surface is a curved surface for diverging the irradiation light incident on the incident surface in a one-dimensional direction.

23. A surface illumination device according to any one of claims 1 to 22, wherein a polarization direction of the irradiation light introduced by the light guide body is set parallel or perpendicular to the principal surface of the light guide plate.

24. A surface illumination device according to any one of claims 1 to 23, wherein:
the light guide body is in the form of a plate having an incident surface on which the irradiation light is incident and an emergent surface from which the irradiation light incident on the incident surface emerges;
the surface illumination device further comprises a connecting portion arranged on the rear surface of the light guide plate for causing the light emerging from the emergent surface of the light guide body to be incident on the end surface of the light guide plate by returning the light;
the light guide body is so tapered as to increase the thickness thereof toward the connecting portion; and
the connecting portion introduces the light incident thereon to the end surface of the light guide plate by totally reflecting the light at least twice.

25. A surface illumination device according to any one of claims 1 to 24, wherein:
the light source includes an SHG light source for emitting green light, a red light source for emitting red light and a blue light source for emitting blue light; and
the red and blue light sources are arranged lateral to the light guide plate.

26. A liquid crystal display, comprising:
a liquid crystal panel; and
a backlight illumination device for illuminating the liquid crystal panel from behind,
wherein a surface illumination device according to any one of claims 1 to 25 is used as the backlight illumination device.
